# EUROPÄISCHE PATENTSCHRIFT

(11) **EP 3 227 387 B1**
(45) Veröffentlichungstag und Bekanntmachung des Hinweises auf die Patenterteilung: **11.03.2020**
(21) Anmeldenummer: 15804420.6
(22) Anmeldetag: 02.12.2015
(51) Int. Cl.: C08L 69/00

(54) **COPOLYCARBONAT-ZUSAMMENSETZUNGEN MIT VERBESSERTEM VERARBEITUNGSVERHALTEN ENTHALTEND PE-WACHSE**
COPOLYCARBONATE COMPOUNDS WITH IMPROVED PROCESSABILITY CONTAINING PE WAXES
COMPOSITION DE COPOLYCARBONATE À COMPORTEMENT DE TRANSFORMATION AMÉLIORÉ COMPRENANT DE LA CIRE PE

(30) Priorität: 04.12.2014 EP 14196208
(43) Veröffentlichungstag der Anmeldung: 11.10.2017
(73) Patentinhaber: Covestro Deutschland AG, 51373 Leverkusen (DE)
(72) Erfinder: WEHRMANN, Rolf, 47800 Krefeld (DE); HEUER, Helmut, Werner, 51371 Leverkusen (DE)
(74) Vertreter: Levpat
(86) Internationale Anmeldenummer: PCT/EP2015/078271
(87) Internationale Veröffentlichungsnummer: WO 2016/087480

(56) Entgegenhaltungen:
- EP-A1- 0 433 723
- EP-A2- 2 338 880
- DE-A1-102010 014 726

## Beschreibung

Die Erfindung betrifft Copolycarbonat-Zusammensetzungen enthaltend oxidierte, säuremodifizierte Polyethylenwachse, deren Verwendung zur Herstellung von Blends, Formteilen und daraus erhältliche Formteile. Die Copolycarbonat-Zusammensetzungen weisen eine verbesserte Fließfähigkeit und damit ein verbessertes Verarbeitungsverhalten auf.

Copolycarbonate gehören zur Gruppe der technischen Thermoplaste. Sie finden vielseitige Anwendungen im Elektro- und Elektronikbereich, als Gehäusewerkstoff von Leuchten und bei Anwendungen, bei denen besondere thermische und mechanische Eigenschaften gefordert sind, beispielsweise Föhne, Anwendungen im Automobilbereich, Kunststoffabdeckungen, Reflektoren, Streuscheiben oder Lichtleitelemente sowie Lampenabdeckungen oder Lampeneinfassungen (bezels). Diese Copolycarbonate können als Blendpartner für weitere thermoplastische Kunststoffe verwendet werden.

Bei diesen Zusammensetzungen werden praktisch immer gute thermische und mechanische Eigenschaften wie eine hohe Vicat-Temperatur (Wärmeformbeständigkeit) und Glastemperatur zwingend benötigt. Hohe Glastemperaturen und Wärmeformbeständigkeiten führen aber gleichzeitig auch zu höheren Schmelzviskositäten, was sich wiederum negativ auf die Verarbeitbarkeit z. B. im Spritzguss auswirkt. Die EP 2 338 880 A2 und die DE 10 2010 014726 A1 beschreiben beispielsweise Copolycarbonatzusammensetzungen mit hohen Glastemperaturen und Wärmeformbeständigkeiten.

Die Fließfähigkeit von (Co)-Polycarbonatzusammensetzungen bzw. (Co) PC Blends kann durch die Zugabe von niedermolekularen Verbindungen erhöht werden. Da derartige Substanzen aber gleichzeitig als Weichmacher (plasticizer) wirken, senken sie die Wärmeformbeständigkeit und die Glastemperatur der Polymermatrix. Dies wiederum ist nicht erwünscht, da dadurch der Temperatureinsatzbereich der Materialien reduziert wird.

DE 102004020673 beschreibt Copolycarbonate mit verbesserter Fließfähigkeit basierend auf Bisphenolen mit einer Ether- bzw. Thioetherverknüpfung.

DE 3918406 offenbart Blends für optische Datenspeicher auf Basis eines speziellen Polycarbonates mit Elastomeren oder anderen Thermoplasten sowie deren Verwendung bei optischen Anwendungen, speziell optischen Datenspeichern wie Compact Disks.

EP 0 953 605 beschreibt lineare Polycarbonatzusammensetzungen mit verbessertem Fließverhalten, welche erhalten werden, indem cyclische Oligocarbonate in großen Mengen , z. B. 0,5 % bis 4 % zugesetzt werden und mittels eines Doppelwellenextruders in der Matrix eines linearen BPA-Polycarbonates bei 285 °C homogenisiert werden. Dabei nimmt die Fließfähigkeit mit steigender Menge an cyclischen Oligocarbonaten zu. Gleichzeitig nimmt aber die Glastemperatur und damit die Wärmeformbeständigkeit deutlich ab. Dies ist bei den technischen Anwendungen von höher wärmeformbeständigen (Co-)Polycarbonatzusammensetzungen unerwünscht. Dieser Nachteil muss dann durch den Einsatz höherer Mengen an teuren Cobisphenolen ausgeglichen werden.

Herkömmlich wird zur Fließverbesserung BDP (Bisphenol A-Diphosphat) verwendet, und zwar in Mengen von bis zu mehr als 10 Gew.-%, um den gewünschten Effekt zu erzielen. Dadurch wird aber die Wärmeformbeständigkeit sehr stark herabgesetzt.

In der EP 0 433 723 A1 wird beschrieben, dass die Zugabe eines oxidierten Polyethylens zu einer BPA-Homopolycarbonat-Zusammensetzung (enthaltend ein Styrol-Acrylonitril-Copolymer) keinen Einfluss auf die Fließfähigkeit hat bzw. diese sogar verschlechtert.

Im Stand der Technik findet der Fachmann keinen Hinweis darauf, wie er bei einer vorgegebenen / definierten Wärmeformbeständigkeit die Fließfähigkeit von (Co)Polycarbonat-zusammensetzungen bzw. von PC Blends verbessern kann.

Es bestand daher die Aufgabe, Zusammensetzungen enthaltend aromatische Polycarbonat-zusammensetzungen bereitzustellen, die bei nahezu gleich bleibender Wärmeformbeständigkeit eine verbesserte Fließfähigkeit aufweisen.

Überraschenderweise wurde gefunden, dass der Zusatz von oxidierten säuremodifizierten Polyethylenwachsen zu Copolycarbonat-Zusammensetzungen zu verbesserten rheologischen Eigenschaften führt, wobei die thermischen und mechanischen Eigenschaften praktisch unverändert bleiben.

Diese neue Eigenschaftskombinationen stellen ein wichtiges Kriterium für die mechanische und thermische Performance daraus hergestellter, spritzgegossener bzw. extrudierter Bauteile dar. Aus den erfindungsgemäßen Copolycarbonat-Zusammensetzungen hergestellte Spritzgussteile oder Extrudate weisen signifikant verbesserte Fließeigenschaften auf, ohne dass die thermischen Eigenschaften sich verschlechtern.

Gegenstand der vorliegenden Erfindung sind daher Copolycarbonat-Zusammensetzungen enthaltend
A) 67,0 bis 99,95 Gew.-% wenigstens eines Copolycarbonats umfassend Monomereinheiten ausgewählt aus der Gruppe bestehend aus den Struktureinheiten der allgemeinen Formeln (1a), (1b), (1c) und (1d) 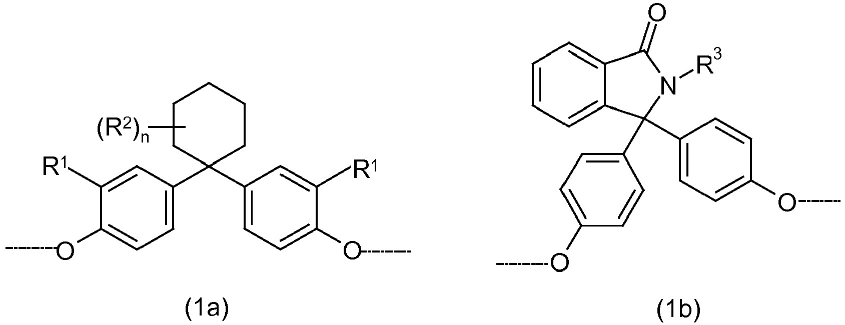 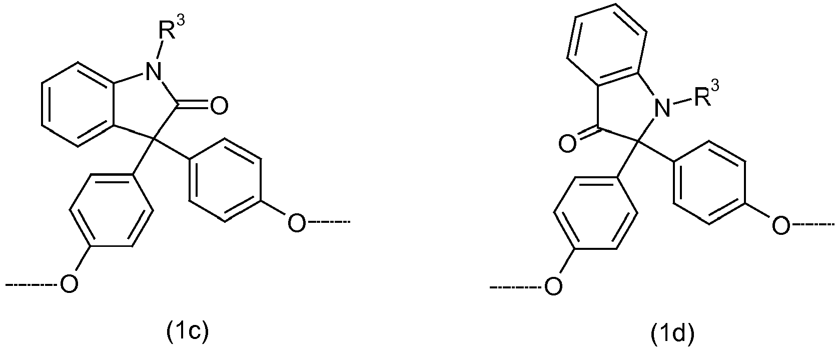 in denen
   R¹ für Wasserstoff oder C₁-C₄-Alkyl, bevorzugt für Wasserstoff,
   R² für C₁-C₄-Alkyl, bevorzugt Methyl,
   n für 0, 1, 2 oder 3, bevorzugt 3 steht, und
   R³ für C₁-C₄-Alkyl, Aralkyl oder Aryl, bevorzugt für Methyl oder Phenyl, ganz besonders bevorzugt für Methyl, steht,
   oder
   67,0 bis 99,95 Gew.-% eines Blends aus dem einen oder den mehreren Copolycarbonat(en) und wenigstens einem weiteren Homo- oder Copolycarbonat enthaltend eine oder mehrere Monomereinheiten der allgemeinen Formel (2): 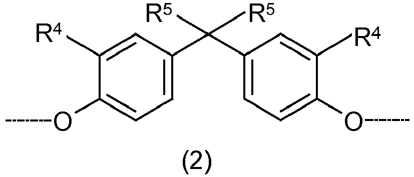 in der
   R⁴ für H, lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, ganz besonders bevorzugt für H oder C₁-Alkyl (Methyl) steht, und
   R⁵ für lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, ganz besonders bevorzugt für C₁-Alkyl (Methyl) steht;
   wobei das gegebenenfalls vorhandene weitere Homo- oder Copolycarbonat keine Monomereinheiten der Formeln (1a), (1b), (1c) und (1d) aufweist;
B) 0,05 bis 10,0 Gew.-% wenigstens eines oxidierten säuremodifizierten Polyethylenwachses; und
C) 0 bis 30,0 Gew.-% eines oder mehrerer Additive und/oder Füllstoffe.

### Definitionen

C₁-C₄-Alkyl steht im Rahmen der Erfindung beispielsweise für Methyl, Ethyl, n-Propyl, iso-Propyl, n-Butyl, sec.-Butyl, tert.-Butyl, C₁-C₆-Alkyl darüber hinaus beispielsweise für n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, C₁-C₁₀-Alkyl darüber hinaus beispielsweise für n-Heptyl und n-Octyl, Pinakyl, Adamantyl, die isomeren Menthyle, n-Nonyl, n-Decyl, C₁C₃₄-Alkyl darüber hinaus beispielsweise für n-Dodecyl, n-Tridecyl, n-Tetradecyl, n-Hexadecyl oder n-Octadecyl. Gleiches gilt für den entsprechenden Alkylrest beispielsweise in Aralkyl- bzw. Alkylaryl-, Alkylphenyl- oder Alkylcarbonylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

Aryl steht für einen carbocyclischen aromatischen Rest mit 6 bis 34 Gerüstkohlenstoffatomen. Gleiches gilt für den aromatischen Teil eines Arylalkylrestes, auch Aralkylrest genannt, sowie für Arylbestandteile komplexerer Gruppen, wie z.B. Arylcarbonylresten.

Beispiele für C₆-C₃₄-Aryl sind Phenyl, o-, p-, m-Tolyl, Naphthyl, Phenanthrenyl, Anthracenyl oder Fluorenyl.

Arylalkyl bzw. Aralkyl bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Die vorangehenden Aufzählungen sind beispielhaft und nicht als Limitierung zu verstehen.

Im Rahmen der vorliegenden Erfindung sind unter ppb und ppm - soweit nichts anderes angegeben - Gewichtsteile zu verstehen.

Im Rahmen der vorliegenden Erfindung beziehen sich die angegebenen Gew.-% der Komponenten A, B und C - soweit nicht explizit anders angegeben - jeweils auf das Gesamtgewicht der Zusammensetzung. Die Zusammensetzung kann neben den Komponenten A, B und C weitere Komponenten enthalten. In einer bevorzugten Ausführungsform besteht die Zusammensetzung aus den Komponenten A, B und gegebenenfalls C.

### Komponente A

Die erfindungsgemäße Copolycarbonat-Zusammensetzung enthält als Komponente A 67,0 bis 99,95 Gew.-% eines Copolycarbonats enthaltend eine oder mehrere Monomereinheiten der Formeln (1a), (1b), (1c) und (1d) oder eines Blends aus dem Copolycarbonat enthaltend eine oder mehrere Monomereinheiten der Formeln (1a), (1b), (1c) und (1d) und einem weiteren Homo- oder Copolycarbonat enthaltend eine oder mehrere Monomereinheiten der allgemeinen Formel (2).

Vorzugsweise ist die Komponente A in einer Menge von 70,0 bis 99,0 Gew.-%, vorzugsweise 80,0 bis 99,0 Gew.-%, und besonders bevorzugt 85,0 bis 98,5 Gew.-%, jeweils bezogen auf das Gesamtgewicht der Zusammensetzung, in der Zusammensetzung enthalten.

In einer bevorzugten Ausführungsform beträgt die Menge des Copolycarbonats enthaltend ein oder mehrere Monomereinheit(en) der allgemeinen Formeln (1a), (1b), (1c) und (1d) in der Zusammensetzung wenigstens 50 Gew.-%, besonders bevorzugt wenigstens 60 Gew.-%, ganz besonders bevorzugt wenigstens 75 Gew.-%.

Die Monomereinheit(en) der allgemeinen Formel (1a) führt man über ein oder mehrere entsprechenden Diphenole der allgemeinen Formel (1a') ein: 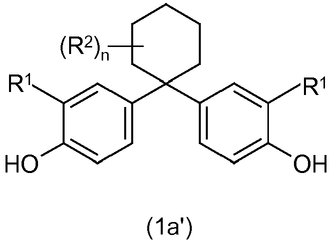 in der
R¹ für Wasserstoff oder C₁-C₄-Alkyl, bevorzugt Wasserstoff,
R² für C₁-C₄-Alkyl, bevorzugt Methyl, und
n für 0, 1, 2 oder 3, bevorzugt 3 stehen.

Die erfindungsgemäß einzusetzenden Diphenole der Formeln (1a') und ihr Einsatz in Homopolycarbonaten sind beispielsweise aus DE 3918406 bekannt.

Besonders bevorzugt ist 1,1-Bis-(4-hydroxyphenyl)-3,3,5-trimethylcyclohexan (Bisphenol TMC) mit der Formel (1a"):

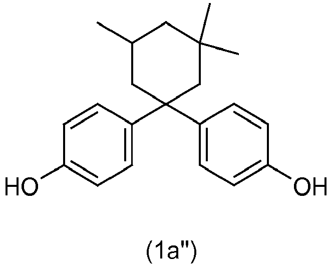

Die Monomereinheit(en) der allgemeinen Formel (1b), (1c) und (1d) führt man über ein oder mehrere entsprechenden Diphenole der allgemeinen Formeln (1b'), (1c') und (1d') ein: 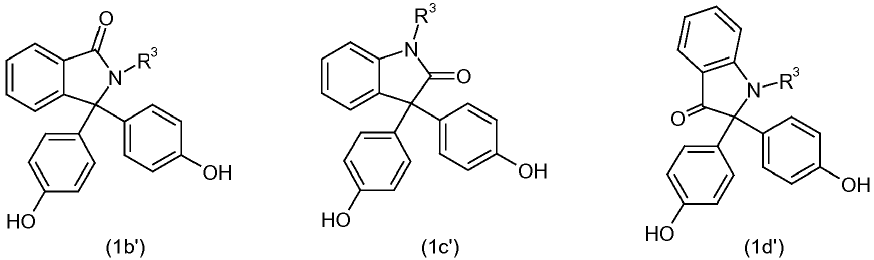 in denen R³ für C₁-C₄-Alkyl, Aralkyl oder Aryl, bevorzugt für Methyl oder Phenyl, ganz besonders bevorzugt für Methyl, steht,
Neben ein oder mehreren Monomereinheiten der Formeln (1a), (1b), (1c) und (1d), können in dem Copolycarbonat der Komponente A ein oder mehrere Monomereinheit(en) der Formel (3) enthalten sein: 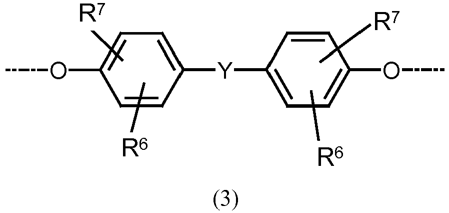 in der
R⁶ und R⁷ unabhängig voneinander für H, C₁-C₁₈-Alkyl-, C₁-C₁₈-Alkoxy, Halogen wie Cl oder Br oder für jeweils gegebenenfalls substituiertes Aryl oder Aralkyl, bevorzugt für H oder C₁-C₁₂-Alkyl, besonders bevorzugt für H oder C₁-C₈-Alkyl und ganz besonders bevorzugt für H oder Methyl stehen, und
Y für eine Einfachbindung, -SO₂-, -CO-, -O-, -S-, C₁-C₆-Alkylen oder C₂-C₅-Alkyliden, ferner für C₆-C₁₂-Arylen, welches gegebenenfalls mit weiteren Heteroatome enthaltenden aromatischen Ringen kondensiert sein kann, steht.

Die Monomereinheit(en) der allgemeinen Formel (3) führt man über ein oder mehrere entsprechenden Diphenole der allgemeinen Formel (3a) ein: 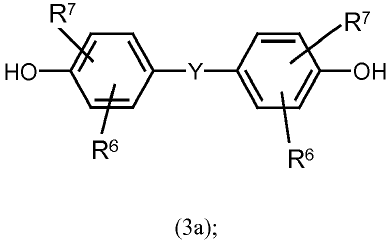 wobei R⁶, R⁷ und Y jeweils die bereits im Zusammenhang mit der Formel (3) erwähnte Bedeutung haben.

Beispielhaft werden für die Diphenole der Formel (3a), die neben den Diphenolen der Formel (1a'), (1b'), (1c') und (1d') eingesetzt werden können, Hydrochinon, Resorcin, Dihydroxybiphenyle, Bis-(hydroxyphenyl)-alkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen und auch α,ω-Bis-(hydroxyphenyl)-polysiloxane genannt.

Bevorzugte Diphenole der Formel (3a) sind beispielsweise 4,4'-Dihydroxybiphenyl (DOD), 4,4'-Dihydroxybiphenylether (DOD-Ether), 2,2-Bis-(4-hydroxyphenyl)-propan (Bisphenol A), 2,4-Bis-(4-hydroxyphenyl)-2-methylbutan, 1,1-Bis-(4-hydroxyphenyl)-1-phenylethan, 1,1-Bis[2-(4-hydroxyphenyl)-2-propyl]-benzol, 1,3-Bis[2-(4-hydroxyphenyl)-2-propyl]-benzol (Bisphenol M), 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 2,2-Bis-(3,5-dichlor-4-hydroxyphenyl)-propan und 2,2-Bis-(3,5-dibrom-4-hydroxyphenyl)-propan.

Besonders bevorzugte Diphenole sind beispielsweise 2,2-Bis-(4-hydroxyphenyl)-propan (Bisphenol A), 4,4'-Dihydroxybiphenyl (DOD), 4,4'-Dihydroxybiphenylether (DOD-Ether), 1,3-Bis[2-(4-hydroxyphenyl)-2-propyl]-benzol (Bisphenol M), 2,2-Bis-(3,5-dimethyl-4-hydroxyphenyl)-propan, 1,1-Bis-(4-hydroxyphenyl)-1-phenylethan, 2,2-Bis-(3,5-dichlor-4-hydroxyphenyl)-propan und 2,2-Bis-(3,5-dibrom-4-hydroxyphenyl)-propan.

Ganz besonders bevorzugt sind Verbindungen der allgemeinen Formel (3b), 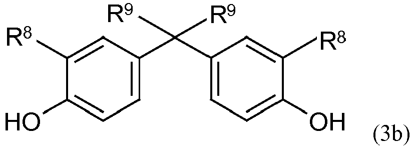
in der R⁸ für H, lineare oder verzweigte C₁-C₁₀ -Alkyl, bevorzugt lineare oder verzweigte C₁-C₆ -Alkyl, besonders bevorzugt für lineare oder verzweigte C₁-C₄-Alkyl, ganz besonders bevorzugt für H oder C₁-Alkyl (Methyl) steht, und
in der R⁹ für lineare oder verzweigte C₁-C₁₀-Alkyl, bevorzugt lineare oder verzweigte C₁-C₆-Alkyl, besonders bevorzugt für lineare oder verzweigte C₁-C₄-Alkyl, ganz besonders bevorzugt für C₁-Alkyl (Methyl) steht.

Hierbei ist insbesondere das Diphenol (3c) ganz besonders bevorzugt.

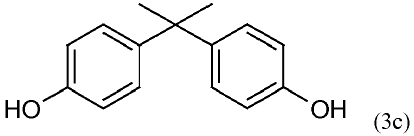

Die Diphenole der allgemeinen Formeln (3a) können sowohl allein als auch im Gemisch miteinander verwendet werden. Die Diphenole sind literaturbekannt oder nach literaturbekannten Verfahren herstellbar (siehe z.B. H. J. Buysch et al., Ullmann's Encyclopedia of Industrial Chemistry, VCH, New York 1991, 5. Ed., Vol. 19, p. 348).

Der Gesamtanteil der Monomereinheiten der Formeln (1a), (1b), (1c) und (1d) im Copolycarbonat beträgt vorzugsweise 0,1 - 88 mol-%, besonders bevorzugt 1 - 86 mol-%, ganz besonders bevorzugt 5 - 84 mol-% und insbesondere 10 - 82 mol-% (bezogen auf die Summe der Mole eingesetzter Diphenole).

In einer bevorzugten Ausführungsform der erfindungsgemäßen Zusammensetzung leiten sich die Diphenolateinheiten der Copolycarbonate gemäß Komponente A von Monomeren mit den allgemeinen Strukturen der oben beschriebenen Formeln (1a") und (3a) ab.

In einer anderen bevorzugten Ausführungsform der erfindungsgemäßen Zusammensetzung leiten sich die Diphenolateinheiten der Copolycarbonate gemäß Komponente A von Monomeren mit den allgemeinen Strukturen der oben beschriebenen Formeln (3a) und (1b'), (1c') und/oder (1d') ab.

Die Copolycarbonatkomponente der Copolycarbonat-Zusammensetzungen kann als block- und statistisches Copolycarbonat vorliegen. Besonders bevorzugt sind statistische Copolycarbonate.

Dabei ergibt sich das Verhältnis der Häufigkeit der Diphenolat-Monomereinheiten im Copolycarbonat aus dem Molverhältnis der eingesetzten Diphenole.

Das optional vorhandene Homo- oder Copolycarbonat der Komponente A enthält Monomereinheit(en) der allgemeinen Formel (2). Man führt sie über ein Diphenol der allgemeinen Formel (2a) ein: 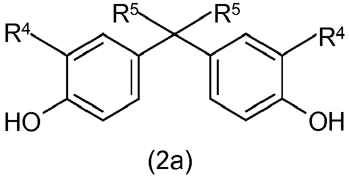
in der R⁴ für H, lineare oder verzweigte C₁-C₁₀-Alkyl, bevorzugt lineare oder verzweigte C₁-C₆ -Alkyl, besonders bevorzugt für lineare oder verzweigte C₁-C₄-Alkyl, ganz besonders bevorzugt für H oder C₁-Alkyl (Methyl) steht und
in der R⁵ für lineare oder verzweigte C₁-C₁₀-Alkyl, bevorzugt lineare oder verzweigte C₁-C₆-Alkyl, besonders bevorzugt für lineare oder verzweigte C₁-C₄-Alkyl, ganz besonders bevorzugt für C₁-Alkyl (Methyl) steht.

Hierbei ist insbesondere das Diphenol (3c), ganz besonders bevorzugt.

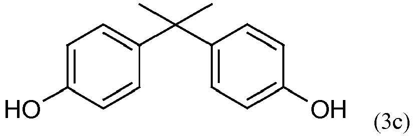

Neben ein oder mehreren Monomereinheiten der allgemeinen Formeln (2), können ein oder mehrere Monomereinheit der Formel (3) enthalten sein, wie sie bereits für Komponente A beschrieben sind.

Soweit als Komponente A ein Blend vorliegt, enthält dieser vorzugsweise ein Homopolycarbonat basierend auf Bisphenol A.

### Herstellungsverfahren

Bevorzugte Herstellungsweisen der Homo- oder Copolycarbonate (im Folgenden zusammen auch bezeichnet als (Co)Polycarbonate), die in der erfindungsgemäßen Zusammensetzung als Komponente A bevorzugt eingesetzt werden, einschließlich der (Co)Polyestercarbonate, sind das Phasengrenzflächenverfahren und das Schmelzeumesterungsverfahren.

Zur Gewinnung hochmolekularer (Co)Polycarbonate nach dem Phasengrenzflächenverfahren werden im Zweiphasengemisch die Alkalisalze von Diphenolen mit Phosgen umgesetzt. Das Molekulargewicht kann durch die Menge an Monophenolen, die als Kettenabbrecher wirken, wie z. B. Phenol, tert.-Butylphenol oder Cumylphenol gesteuert werden, besonders bevorzugt Phenol, tert.-Butylphenol. Bei diesen Umsetzungen entstehen praktisch ausschließlich lineare Polymere. Dies kann durch Endgruppenanalyse nachgewiesen werden. Durch gezielte Verwendung von sogenannten Verzweigern, in der Regel mehrfach hydroxylierte Verbindungen, werden dabei auch verzweigte Polycarbonate erhalten.

Als Verzweiger können geringe Mengen, vorzugsweise Mengen zwischen 0,05 und 5 Mol-%, besonders bevorzugt 0,1-3 Mol-%, ganz besonders bevorzugt 0,1-2 Mol-%, bezogen auf die Mole eingesetzter Diphenole, an trifunktionellen Verbindungen wie z.B. Isatinbiskresol (IBK) oder Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan (THPE); Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α,α',α"-Tris-(4-hydroxyphenyl)-1,3,5-triisopropyl-benzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere; 1,1,1-Tri-(4-hydroxyphenyl)-ethan (THPE) und Bis-(3-methyl-4-hydroxyphenyl)-2-oxo-2,3-dihydroindol eingesetzt werden. Bevorzugt werden Isatinbiskresol sowie 1,1,1-Tri-(4-hydroxyphenyl)-ethan (THPE) und Bis-(3-methyl-4-hydroxyphenyl)-2-oxo-2,3-dihydroindol als Verzweiger eingesetzt.

Durch den Einsatz dieser Verzweiger ergeben sich verzweigte Strukturen. Die resultierende Langkettenverzweigung führt meist zu rheologischen Eigenschaften der erhaltenen Polycarbonate, die sich in einer Strukturviskosität im Vergleich zu linearen Typen äußert.

Die Menge an einzusetzendem Kettenabbrecher beträgt vorzugsweise 0,5 Mol-% bis 10 Mol-%, bevorzugt 1 Mol-% bis 8 Mol-%, besonders bevorzugt 2 Mol-% bis 6 Mol-% bezogen auf Mole an jeweils eingesetzten Diphenolen. Die Zugabe der Kettenabbrecher kann vor, während oder nach der Phosgenierung erfolgen, bevorzugt als Lösung in einem Lösungsmittelgemisch aus Methylenchlorid und Chlorbenzol (8-15 Gew.-%-ig).

Zur Gewinnung hochmolekularer (Co)Polycarbonate nach dem Schmelzumesterungsverfahren werden Diphenole mit Kohlensäurediestern, meist Diphenylcarbonat, in Anwesenheit von Katalysatoren, wie Alkalisalzen, Ammonium- oder Phosphoniumverbindungen, in der Schmelze umgesetzt.

Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-C 10 31 512 beschrieben.

Beim Schmelzumesterungsverfahren werden Diphenole der Formeln (2a) und gegebenenfalls (1a) mit Kohlensäurediestern unter Zuhilfenahme von geeigneten Katalysatoren und gegebenenfalls weiteren Zusatzstoffen in der Schmelze umgeestert.

Kohlensäurediester im Sinne der Erfindung sind solche der Formeln (4) und (5) 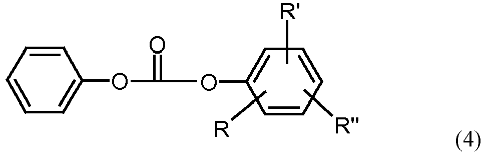 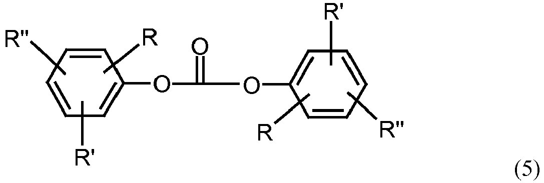 wobei
R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können,
beispielsweise
Diphenylcarbonat, Butylphenyl-phenylcarbonat, Di-Butylphenylcarbonat, Isobutylphenylphenylcarbonat, Di-Isobutylphenylcarbonat, tert-Butylphenyl-phenylcarbonat, Di-tert-Butylphenylcarbonat, n-Pentylphenyl-phenylcarbonat, Di-(n-Pentylphenyl)carbonat, n-Hexylphenyl-phenylcarbonat, Di-(n-Hexylphenyl)carbonat, Cyclohexylphenyl-phenylcarbonat, Di-Cyclohexylphenylcarbonat, Phenylphenol-phenylcarbonat, Di-Phenylphenolcarbonat, Isooctylphenyl-phenylcarbonat, Di-Isooctylphenylcarbonat, n-Nonylphenyl-phenylcarbonat, Di-(n-Nonylphenyl)carbonat, Cumylphenylphenylcarbonat, Di-Cumylphenylcarbonat, Naphthylphenyl-phenylcarbonat, Di-Naphthylphenylcarbonat, Di-tert-Butylphenyl-phenylcarbonat, Di-(Di-tert-Butylphenyl)carbonat, Dicumylphenyl-phenylcarbonat, Di-(Dicumylphenyl)carbonat, 4-Phenoxyphenyl-phenylcarbonat, Di-(4-Phenoxyphenyl)carbonat, 3-Pentadecylphenyl-phenylcarbonat, Di-(3-Pentadecylphenyl)-carbonat Tritylphenyl-phenylcarbonat, Di-Tritylphenylcarbonat,
bevorzugt Diphenylcarbonat, tert-Butylphenyl-phenylcarbonat, Di-tert-Butylphenylcarbonat, Phenylphenol-phenylcarbonat, Di-Phenylphenolcarbonat, Cumylphenyl-phenylcarbonat, Di-Cumylphenylcarbonat, besonders bevorzugt Diphenylcarbonat.
Es können auch Mischungen der genannten Kohlensäurediester eingesetzt werden.

Der Anteil an Kohlensäureestern beträgt 100 bis 130 mol-%, bevorzugt 103 bis 120 mol-%, besonders bevorzugt 103 bis 109 mol-%, bezogen auf die ein oder mehreren Diphenole.

Als Katalysatoren werden im Schmelzumesterungsverfahren, wie in der genannten Literatur beschrieben, basische Katalysatoren wie beispielsweise Alkali- und Erdalkalihydroxide und -oxide, aber auch Ammonium- oder Phosphoniumsalze, im Folgenden als Oniumsalze bezeichnet, eingesetzt. Bevorzugt werden dabei Oniumsalze, besonders bevorzugt Phosphoniumsalze eingesetzt. Phosphoniumsalze im Sinne der Erfindung sind solche der folgenden allgemeinen Formel (6) 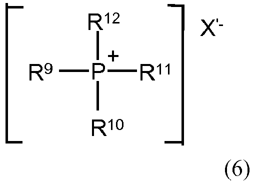 wobei
R⁹⁻¹² dieselben oder verschiedene C₁-C₁₀-Alkyle, C₆-C₁₀-Aryle, C₇-C₁₀-Aralkyle oder C₅-C₆-Cycloalkyle sein können, bevorzugt Methyl oder C₆-C₁₄-Aryle, besonders bevorzugt Methyl oder Phenyl, und
X'⁻ ein Anion wie Hydroxid, Sulfat, Hydrogensulfat, Hydrogencarbonat, Carbonat, ein Halogenid, bevorzugt Chlorid, oder ein Alkoholat der Formel OR¹⁷ sein kann, wobei R¹⁷ C₆-C₁₄-Aryl oder C₇-C₁₂-Aralkyl, bevorzugt Phenyl, sein kann.

Bevorzugte Katalysatoren sind Tetraphenylphosphoniumchlorid, Tetraphenylphosphoniumhydroxid, Tetraphenylphosphoniumphenolat, besonders bevorzugt Tetraphenylphosphoniumphenolat.

Die Katalysatoren werden bevorzugt in Mengen von 10⁻⁸ bis 10⁻³ mol, bezogen auf ein mol Diphenol, besonders bevorzugt in Mengen von 10⁻⁷ bis 10⁻⁴ mol, eingesetzt.

Weitere Katalysatoren können allein oder gegebenenfalls zusätzlich zu dem Oniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat. Die Mengen des Cokatalysators können im Bereich von 1 bis 200 ppb, vorzugsweise 5 bis 150 ppb und am meisten bevorzugt 10 bis 125 ppb liegen, jeweils berechnet als Natrium.

Die Zugabe der Katalysatoren erfolgt in Lösung, um bei der Dosierung schädliche Überkonzentrationen zu vermeiden. Die Lösungsmittel sind system- und verfahrensinhärente Verbindungen wie beispielsweise Diphenol, Kohlensäurediester oder Monohydroxyarylverbindungen. Besonders bevorzugt sind Monohydroxyarylverbindungen, weil dem Fachmann geläufig ist, dass sich die Diphenole und Kohlensäurediester bei schon leicht erhöhten Temperaturen, insbesondere unter Katalysatoreinwirkung, leicht verändern und zersetzen. Hierunter leiden die Polycarbonatqualitäten. Beim technisch bedeutsamen Umesterungsverfahren zur Herstellung von Polycarbonat ist die bevorzugte Verbindung Phenol. Phenol bietet sich auch deshalb schon zwingend an, weil der vorzugsweise benutzte Katalysator Tetraphenylphosphoniumphenolat bei der Herstellung als Mischkristall mit Phenol isoliert wird.

Das Verfahren zur Herstellung der in der erfindungsgemäßen Zusammensetzung enthaltenen (Co)Polycarbonate nach dem Umesterungsverfahren kann diskontinuierlich oder auch kontinuierlich gestaltet werden. Nachdem die Diphenole der Formeln (2a) und gegebenenfalls (1a) und Kohlensäurediester, ggf. mit weiteren Verbindungen, als Schmelze vorliegen, wird in Gegenwart des Katalysators die Umsetzung gestartet. Der Umsatz bzw. das Molekulargewicht wird bei steigenden Temperaturen und fallenden Drücken in geeigneten Apparaten und Vorrichtungen durch Abführen der sich abspaltenden Monohydroxyarylverbindung solange erhöht, bis der angestrebte Endzustand erreicht ist. Durch Wahl des Verhältnisses Diphenol zu Kohlensäurediester und der durch Wahl der Verfahrensweise bzw. Anlage zur Herstellung des Polycarbonats gegebenen Verlustrate des Kohlensäurediesters über die Brüden und ggf. zugesetzter Verbindungen, wie beispielsweise einer höhersiedenden Monohydroxyarylverbindung, werden die Endgruppen in Art und Konzentration geprägt.

Bezüglich der Art und Weise, in welcher Anlage und nach welcher Verfahrensweise der Prozess ausgeführt wird, gibt es keine Limitierung und Einschränkung.

Weiter gibt es keine spezielle Limitierung und Einschränkung bezüglich der Temperaturen, der Drücke und verwendeter Katalysatoren, um die Schmelzeumesterungsreaktion zwischen dem Diphenol und dem Kohlensäurediester, ggf. auch anderer zugesetzter Reaktanten durchzuführen. Jede Bedingung ist möglich, solange die gewählten Temperaturen, Drucke und Katalysatoren eine Schmelzeumesterung unter entsprechend schneller Entfernung der abgespaltenen Monohydroxyarylverbindung ermöglichen.

Die Temperaturen über den gesamten Prozess betragen im Allgemeinen 180 bis 330°C bei Drücken von 15 bar, absolut bis 0,01 mbar, absolut.

Meist wird eine kontinuierliche Verfahrensweise gewählt, weil das vorteilhaft für die Produktqualität ist.

Vorzugsweise ist das kontinuierliche Verfahren zur Herstellung von Polycarbonaten dadurch gekennzeichnet, dass ein oder mehrere Diphenole mit dem Kohlensäurediester, ggf. auch anderer zugesetzter Reaktanten unter Verwendung der Katalysatoren, nach einer Vorkondensation ohne Abtrennen der gebildeten Monohydroxyarylverbindung in sich dann daran anschließenden mehreren Reaktions-Verdampfer-Stufen bei schrittweise steigenden Temperaturen und schrittweise fallenden Drucken das Molekulargewicht bis zum gewünschten Niveau aufgebaut wird.

Die für die einzelnen Reaktions-Verdampfer-Stufen geeigneten Vorrichtungen, Apparate und Reaktoren sind entsprechend dem Verfahrensverlauf Wärmetauscher, Entspannungsapparate, Abscheider, Kolonnen, Verdampfer, Rührbehälter und Reaktoren oder sonstige käufliche Apparate, welche die nötige Verweilzeit bei ausgewählten Temperaturen und Drucken bereitstellen. Die gewählten Vorrichtungen müssen den nötigen Wärmeeintrag ermöglichen und so konstruiert sein, dass sie den kontinuierlich wachsenden Schmelzviskositäten gerecht werden.

Alle Vorrichtungen sind über Pumpen, Rohrleitungen und Ventilen miteinander verbunden. Die Rohrleitungen zwischen allen Einrichtungen sollten selbstverständlich so kurz wie möglich sein und die Krümmungen der Leitungen so gering wie möglich gehalten werden, um unnötig verlängerte Verweilzeiten zu vermeiden. Dabei sind die äußeren, das heißt technischen Rahmenbedingungen und Belange für Montagen chemischer Anlagen zu berücksichtigen.

Zur Durchführung des Verfahrens nach einer bevorzugten kontinuierlichen Verfahrensweise können die Reaktionspartner entweder gemeinsam aufgeschmolzen oder aber das feste Diphenol in der Kohlensäurediesterschmelze oder der feste Kohlensäurediester in der Schmelze des Diphenols gelöst werden oder beide Rohstoffe werden als Schmelze, bevorzugt direkt aus der Herstellung, zusammengeführt. Die Verweilzeiten der getrennten Schmelzen der Rohstoffe, insbesondere die der Schmelze des Diphenols, werden so kurz wie möglich eingestellt. Das Schmelzegemisch kann dagegen wegen des im Vergleich zu den einzelnen Rohstoffen erniedrigten Schmelzpunktes des Rohstoffgemisches bei entsprechend niedrigeren Temperaturen ohne Qualitätseinbußen länger verweilen.

Danach wird der Katalysator, vorzugsweise in Phenol gelöst, zugemischt und die Schmelze auf die Reaktionstemperatur erhitzt. Diese beträgt zu Beginn des technisch bedeutsamen Prozesses zur Herstellung von Polycarbonat aus 2,2-Bis-(4-hydroxyphenyl)-propan und Diphenylcarbonat 180 bis 220°C, vorzugsweise 190 bis 210°C, ganz besonders bevorzugt 190°C. Bei Verweilzeiten von 15 bis 90 min, vorzugsweise 30 bis 60 min, wird das Reaktionsgleichgewicht eingestellt, ohne dass die gebildete Hydroxyarylverbindung entnommen wird. Die Reaktion kann bei Atmosphärendruck, aber aus technischen Gründen auch bei Überdruck gefahren werden. Der bevorzugte Druck in technischen Anlagen beträgt 2 bis 15 bar absolut.

Das Schmelzegemisch wird in eine erste Vakuumkammer, deren Druck auf 100 bis 400 mbar, vorzugsweise auf 150 bis 300 mbar eingestellt wird, entspannt und direkt danach in einer geeigneten Vorrichtung bei gleichem Druck wieder auf die Eintrittstemperatur erhitzt. Bei dem Entspannungsvorgang wird die entstandene Hydroxyarylverbindung mit noch vorhandenen Monomeren verdampft. Nach einer Verweilzeit von 5 bis 30 min in einer Sumpfvorlage ggf. mit Umpumpung bei gleichem Druck und gleicher Temperatur wird das Reaktionsgemisch in eine zweite Vakuumkammer, deren Druck 50 bis 200 mbar, vorzugsweise 80 bis 150 mbar beträgt, entspannt und direkt danach in einer geeigneten Vorrichtung bei gleichem Druck auf eine Temperatur von 190 bis 250°C, bevorzugt 210 bis 240°C, besonders bevorzugt 210 bis 230°C, erwärmt. Auch hierbei wird die entstandene Hydroxyarylverbindung mit noch vorhandenen Monomeren verdampft. Nach einer Verweilzeit von 5 bis 30 min in einer Sumpfvorlage, ggf. mit Umpumpung, bei gleichem Druck und gleicher Temperatur wird das Reaktionsgemisch in eine dritte Vakuumkammer, deren Druck 30 bis 150 mbar, vorzugsweise 50 bis 120 mbar beträgt, entspannt und direkt danach in einer geeigneten Vorrichtung bei gleichem Druck auf eine Temperatur von 220 bis 280°C, bevorzugt 240 bis 270°C, besonders bevorzugt 240 bis 260°C, erwärmt. Auch hierbei wird die entstandene Hydroxyarylverbindung mit noch vorhandenen Monomeren verdampft. Nach einer Verweilzeit von 5 bis 20 min in einer Sumpfvorlage ggf. mit Umpumpung bei gleichem Druck und gleicher Temperatur wird das Reaktionsgemisch in eine weitere Vakuumkammer, deren Druck bei 5 bis 100 mbar, bevorzugt 15 bis 100 mbar, besonders bevorzugt 20 bis 80 mbar beträgt, entspannt und direkt danach in einer geeigneten Vorrichtung bei gleichem Druck auf eine Temperatur von 250 bis 300°C, vorzugsweise 260 bis 290°C, besonders bevorzugt 260 bis 280°C, erwärmt. Auch hierbei wird die entstandene Hydroxyarylverbindung mit noch vorhandenen Monomeren verdampft.

Die Zahl dieser Stufen, hier beispielhaft 4, kann zwischen 2 und 6 variieren. Die Temperaturen und Drucke sind bei Änderung der Stufigkeit entsprechend anzupassen, um vergleichbare Resultate zu erhalten. Die in diesen Stufen erreichte rel. Viskosität des oligomeren Carbonats liegt zwischen 1,04 und 1,20, bevorzugt zwischen 1,05 und 1,15, besonders bevorzugt zwischen 1,06 bis 1,10.

Das so erzeugte Oligocarbonat wird nach einer Verweilzeit von 5 bis 20 min in einer Sumpfvorlage ggf. mit Umpumpung bei gleichem Druck und gleicher Temperatur wie in der letzten Flash-/Verdampferstufe in einen Scheiben- oder Korbreaktor gefördert und bei 250 bis 310°C, bevorzugt 250 bis 290°C, besonders bevorzugt 250 bis 280°C, bei Drucken von 1 bis 15 mbar, vorzugsweise 2 bis 10 mbar, bei Verweilzeiten von 30 bis 90 min, vorzugsweise 30 bis 60 min, weiter aufkondensiert. Das Produkt erreicht eine rel. Viskosität von 1,12 bis 1,28, bevorzugt 1,13 bis 1,26, besonders bevorzugt 1,13 bis 1,24.

Die diesen Reaktor verlassende Schmelze wird in einem weiteren Scheiben- oder Korbreaktor auf die gewünschte Endviskosität bzw. das Endmolekulargewicht gebracht. Die Temperaturen betragen 270 bis 330°C, bevorzugt 280 bis 320°C, besonders bevorzugt 280 bis 310°C, der Druck 0,01 bis 3 mbar, vorzugsweise 0,2 bis 2 mbar, bei Verweilzeiten von 60 bis 180 min, vorzugsweise 75 bis 150 min. Die rel. Viskositäten werden auf das für die vorgesehene Anwendung nötige Niveau eingestellt und betragen 1,18 bis 1,40, bevorzugt 1,18 bis 1,36, besonders bevorzugt 1,18 bis 1,34.

Die Funktion der beiden Korbreaktoren bzw. Scheibenreaktoren kann auch in einem Korbreaktor bzw. Scheibenreaktor zusammengefasst werden.

Die Brüden aus allen Verfahrensstufen werden unmittelbar abgeleitet, gesammelt und aufgearbeitet. Diese Aufarbeitung erfolgt in der Regel destillativ, um hohe Reinheiten der rückgewonnenen Stoffe zu erreichen. Dies kann beispielsweise gemäss Deutscher Patentanmeldung Nr. 10 100 404 erfolgen. Eine Rückgewinnung und Isolierung der abgespaltenen Monohydroxyarylverbindung in reinster Form ist aus ökonomischer und ökologischer Sicht selbstverständlich.

Die Monohydroxyarylverbindung kann direkt zur Herstellung eines Diphenols oder eines Kohlensäurediesters verwendet werden.

Die Scheiben- oder Korbreaktoren zeichnen sich dadurch aus, dass sie bei hohen Verweilzeiten eine sehr große, sich ständig erneuernde Oberfläche am Vakuum bereitstellen. Die Scheiben- oder Korbreaktoren sind entsprechend den Schmelzviskositäten der Produkte geometrisch ausgebildet. Geeignet sind beispielsweise Reaktoren, wie sie in der DE 44 47 422 C2 und EP A 1 253 163, oder Zweiwellenreaktoren, wie sie in der WO A 99/28 370 beschrieben sind.

Die Oligocarbonate, auch sehr niedermolekulare, und die fertigen Polycarbonate werden in der Regel mittels Zahnradpumpen, Schnecken unterschiedlichster Bauart oder Verdrängerpumpen spezieller Bauart gefördert.

Analog zum Phasengrenzflächenverfahren können mehrfunktionelle Verbindungen als Verzweiger eingesetzt werden.

Die relative Lösungsviskosität der in der erfindungsgemäßen Zusammensetzung enthaltenen Poly- oder Copolycarbonate, bestimmt nach DIN 51562, liegt bevorzugt im Bereich von = 1,15 - 1,35.

Die mittleren Gewichtsmolekulargewichte in der erfindungsgemäßen Zusammensetzung enthaltenen Homo- oder Copolycarbonate betragen vorzugsweise 15.000 bis 40.000 g/mol, besonders bevorzugt 17.000 bis 36.000 g/mol, und ganz besonders bevorzugt 17.000 bis 34.000 g/mol, und werden durch GPC gegen eine Polycarbonat-Eichung bestimmt.

Besonders bevorzugt sind Copolycarbonat-Zusammensetzungen, in denen das Copolycarbonat der Komponente A und/oder das ggf. ferner vorhandene weitere Homo-oder Copolycarbonat der Komponente Awenigstens zum Teil als Endgruppe eine Struktureinheit, die sich von Phenol ableitet und/oder eine Struktureinheit, die sich von 4-tert-Butylphenol ableitet enthalten.

### Komponente B

Die erfindungsgemäßen Zusammensetzungen enthalten als Komponente B wenigstens ein oxidiertes säuremodifiziertes Polyethylenwachs.

Die verwendeten speziellen oxidierten säuremodifizierten Polyethylenwachse verfügen vorzugsweise über einen Oxidationsindex (OI) von größer 8, wobei der Oxidationsindex OI IR-spektroskopisch ermittelt wird. Die Bestimmung erfolgt, indem die Fläche des Peaks zwischen 1750 cm⁻¹ und 1680 cm⁻¹ (Carbonyl, Fläche C=O) zu der Fläche des Peaks zwischen 1400 cm⁻¹ und 1330 cm⁻¹ (Aliphaten-CHₓ, Fläche Aliphat) ins Verhältnis gesetzt wird. Die Berechnung erfolgt gemäß: OI = Fläche C=O / Fläche Aliphat ^{∗} 100. Die Bestimmung kann mit einem handelsüblichen FT-IR-Spekrometer, z. B. Nicolet 5700 oder FT-IR-Gerät 20DX von Thermo Fisher Scientific erfolgen.

Bei den verwendeten speziellen oxidierten säuremodifizierten Polyethylenwachsen (im Folgenden auch "PE-Wachse") handelt es sich um PE-Wachse, welche üblicherweise durch Direktpolymerisation von Ethylen nach dem Ziegler-Verfahren hergestellt werden. In einem nachfolgenden Reaktionsschritt erfolgt eine Luftoxidation, welche zu modifizierten Typen führt. Diese speziellen oxidierten Typen weisen einen Gehalt an Säuremodifikationen auf. Die Polyethylenwachse werden insbesondere von der Firma Mitsui unter der Marke "Hi-WAX", säuremodifizierte Typen, angeboten. Die Säurezahlen liegen vorzugsweise zwischen 0,5 und 20 mg KOH/g. Bevorzugt werden Typen mit Säurezahlen < 10 mg KOH/g eingesetzt (Testmethode JIS K0070). Die Molekulargewichte (M_{η}) dieser oxidierten säuremodifizierten Polyethylenwachse liegen bevorzugt zwischen 1500 g/mol und 5000 g/mol. Sie weisen vorzugsweise eine Kristallinität von mindestens 60 % und höchstens 90 % auf. Ihre Schmelzpunkte liegen vorzugsweise im Bereich von größer 90 °C und kleiner 130 °C. Die bei 140 °C gemessenen Schmelzeviskositäten, bestimmt nach ISO 11443, liegen vorzugsweise zwischen 70 mPas·s und 800 mPa·s.

Die oxidierten säuremodifizierten Polyethylenwachse werden vorzugsweise *in situ* in einem kontinuierlichen oder batch-weisen Polycarbonatherstellprozess über Seitenaggregat direkt oder in Form eines Masterbatches oder in einem Compoundierprozess direkt oder in Form eines Masterbatches über ein Seitenaggregat, vorzugsweise unter Luftausschluss, der Polycarbonatschmelze zugeführt.

Die oxidierten säuremodifizierten Polyethylenwachse werden in Mengen von 0,05 bis 10,0 Gew.-%, bevorzugt 0,08 bis 6,0 Gew.-%, weiter bevorzugt 0,10 bis 5,0 Gew.-% und besonders bevorzugt 0,15 bis 4,5 Gew.-%, und ganz besonders bevorzugt von 0,15 bis 4,0 Gew.-%, bezogen auf das Gesamtgewicht der Zusammensetzung, eingesetzt.

### Komponente C

Gegenstand der vorliegenden Erfindung sind weiterhin Zusammensetzungen enthaltend die Komponenten A und B und optional als Komponente C ein oder mehrere Additive und/oder Füllstoffe in einer Gesamtmenge von bis zu 30 Gew.-%.

Soweit Additive und/oder Füllstoffe enthalten sind, sind diese vorzugsweise ausgewählt aus der Gruppe bestehend aus Ruß, UV-Stabilisatoren, IR-Absorber, Thermostabilisatoren, Antistatika und Pigmente, Farbmittel in den üblichen Mengen; gegebenenfalls können das Entformungsverhalten, das Fließverhalten, und/oder die Flammwidrigkeit noch durch Zusatz externer Entformungsmittel, Fließmittel, und/oder Flammschutzmittel wie Sulfonsäuresalze, PTFE-Polymere bzw. PTFE-Copolymere, bromierte Oligocarbonate, oder Oligophosphate sowie Phosphazene verbessert werden (z. B. Alkyl- und Arylphosphite, -phosphate, -phosphane, -niedermolekulare Carbonsäureester, Halogenverbindungen, Salze, Kreide, Talk, thermisch oder elektrisch leitfähige Ruße oder Graphite, Quarz-/Quarzmehl, Glas- und Kohlenstofffasern, Pigmente oder auch Additive zur Reduktion des linearen thermischen Ausdehnungskoeffizienten (CLTE) und deren Kombination. Solche Verbindungen werden z. B. in WO 99/55772, S. 15 - 25, und in "Plastics Additives", R. Gächter und H. Müller, Hanser Publishers 1983, beschrieben).

Die Zusammensetzung enthält im Allgemeinen 0 bis 5,0 Gew.-%, bevorzugt 0 bis 2,50 Gew.-%, besonders bevorzugt 0 bis 1,60 Gew.-%, ganz besonders bevorzugt 0,03 bis 1,50 Gew.-%, insbesondere ganz besonders bevorzugt 0,02 bis 1,0 Gew.-% (bezogen auf die Gesamtzusammensetzung) organische Additive.

Die den erfindungsgemäßen Zusammensetzungen gegebenenfalls zugesetzten Entformungsmitttel sind bevorzugt ausgewählt aus der Gruppe bestehend aus Pentaerythrittetrastearat, Glycerinmonostearat und langkettigen Fettsäureestern, wie beispielsweise Stearylstearat und Propandiolstearat, sowie deren Mischungen. Die Entformungsmittel werden vorzugsweise eingesetzt in Mengen von 0,05 Gew.-% bis 2,00 Gew.-%, bevorzugt in Mengen von 0,1 Gew.-% bis 1,0 Gew.-%, besonders bevorzugt in Mengen von 0,15 Gew.-% bis 0,60 Gew.-% und ganz besonders bevorzugt in Mengen von 0,20 Gew.-% bis 0,50 Gew.-%, bezogen auf das Gesamtgewicht der Komponenten A, B und C.

Geeignete Additive und Füllstoffe sind beispielsweise beschrieben in "Additives for Plastics Handbook, John Murphy, Elsevier, Oxford 1999", im "Plastics Additives Handbook, Hans Zweifel, Hanser, München 2001".

Geeignete Antioxidantien bzw. Thermostabilisatoren sind beispielsweise:
Alkylierte Monophenole, Alkylthiomethylphenole, Hydrochinone und alkylierte Hydrochinone, Tocopherole, Hydroxylierte Thiodiphenylether, Alkylidenbisphenole, O-, N- und S-Benzylverbindungen, Hydroxybenzylierte Malonate, Aromatische Hydroxybenzylverbindungen, Triazinverbindungen, Acylaminophenole, Ester von β-(3,5-Di-tert-butyl-4-hydroxyphenyl)-propionsäure, Ester von β-(5-tert-Butyl-4-hydroxy-3-methylphenyl)-propionsäure, Ester von β-(3,5-Dicyclohexyl-4-hydroxyphenyl)-propionsäure, Ester von 3,5-Di-tert-butyl-4-hydroxyphenylessigsäure, Amide von β-(3,5-Di-tert-butyl-4-hydroxyphenyl)-propionsäure, geeignete Thiosynergisten, sekundäre Antioxidantien, Phosphite und Phosphonite, Benzofuranone und Indolinone.

Als Thermostabilisator eignen sich bevorzugt Tris-(2,4-di-tert-butylphenyl)phosphit (Irgafos 168), Tetrakis(2,4-di-tert.-butylphenyl)[1,1biphenyl]-4,4'-diylbisphosphonit, Triisoctylphosphat (TOF), Octadecyl-3-(3,5-di-tert butyl-4-hydroxyphenyl)propionat (Irganox 1076), Bis(2,4-dicumylphenyl)pentaerythritoldiphosphit (Doverphos S-9228), Bis(2,6-di-tert.butyl-4-methylphenyl)-pentaerythritoldiphosphit (ADK STAB PEP-36) und Triphenylphosphin (TPP). Sie werden allein oder im Gemisch (z. B. Irganox B900 oder Doverphos S-9228 mit Irganox B900 bzw. Irganox 1076 oder Triphenylphosphin (TPP) mit Triisoctylphosphat (TOF)) eingesetzt. Thermostabilisatoren werden vorzugsweise eingesetzt in Mengen von 0,005 Gew.-% bis 2,00 Gew.-%, bevorzugt in Mengen von 0,01 Gew.-% bis 1,0 Gew.-%, besonders bevorzugt in Mengen von 0,015 Gew.-% bis 0,60 Gew.-% und ganz besonders bevorzugt in Mengen von 0,02 Gew.-% bis 0,50 Gew.-%, bezogen auf das Gesamtgewicht der Komponenten A, B und C.

Als Komplexierungsmittel für Schwermetalle und zur Neutralisation von Alkalispuren sind o/m Phosphorsäuren, ganz oder teilweise veresterte Phosphate oder Phosphite geeignet.

Als Lichtschutzmittel (UV-Absorber) sind geeignet 2-(2'-Hydroxyphenyl)-benzotriazole, 2-Hydroxybenzophenone, Ester von substituierten und unsubstituierten Benzoesäuren, Acrylate, Sterisch gehinderte Amine, Oxamide sowie 2-(Hydroxyphenyl)-1,3,5-triazine bzw. substituierte Hydroxyalkoxyphenyl, 1,3,5-triazole, bevorzugt sind substituierte Benzotriazole wie z.B. 2-(2'-hydroxy-5'-methyl-phenyl)-benzotriazol, 2-(2'-hydroxy-3',5'-di-t-butyl-phenyl)-benzotriazol, 2-(2'-hydroxy-3'-tert.-butyl-5'-methyl-phenyl)-5-chlorobenzotriazol, 2-(2'-hydroxy-3',5'-tert.-butylphenyl)-5-chlorobenzotriazol, 2-(2'-hydroxy-5'-tert.-octylphenyl)-benzotriazol, 2-(2'-hydroxy-3',5'-di-tert.-amylphenyl)-benzotriazol, 2-[2'-hydroxy-3'-(3",4",5",6"-tetrahydrophthalimido-ethyl)-5'-methylphenyl]-benzotriazol and 2,2'-methylenbis [4-(1,1,3,3-tetramethylbutyl)-6-(2H-benzotriazol-2-yl)-phenol].

Als UV-Stabilisatoren sind weiterhin geeignet ausgewählt aus der Gruppe, die Benzotriazole (z. B. Tinuvine der Fa. BASF), Triazin Tinuvin 1600 der Fa. BASF), Benzophenone (Uvinule der Fa. BASF), Cyanacrylate (Uvinule der Fa. BASF), Zimtsäureester und Oxalanilide sowie Mischungen dieser UV-Stabilisatoren umfasst.

Die UV-Stabilisatoren werden eingesetzt in Mengen von 0,01 Gew.-% bis 2,0 Gew.-% bezogen auf die Formmasse, bevorzugt in Mengen von 0,05 Gew.-% bis 1,00 Gew.-%, besonders bevorzugt in Mengen von 0,08 Gew.-% bis 0,5 Gew.-% und ganz besonders bevorzugt in Mengen von 0,1 Gew.-% bis 0,4 Gew.-% bezogen auf die Gesamtzusammensetzung.

Polypropylenglykole allein oder in Kombination mit z. B. Sulfonen oder Sulfonamiden als Stabilisatoren können gegen die Schädigung durch Gamma-Strahlen verwendet werden.

Diese und andere Stabilisatoren können einzeln oder in Kombinationen verwendet werden und in den genannten Formen dem Polymer zugesetzt werden.

Geeignete flammhemmende Additive sind Phosphatester, d. h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

Des weiteren können Farbmittel, wie organische Farbstoffe oder Pigmente oder anorganische Pigmente, Ruß, IR-Absorber, einzeln, im Gemisch oder auch in Kombination mit Stabilisatoren, Glasfasern, Glas(hohl)kugeln, anorganischen Füllstoffen wie beispielsweise Titandioxid, Talk, Silikate oder Bariumsulfat zugesetzt werden.

In einer besonders bevorzugten Ausführungsform enthält die erfindungsgemäße Zusammensetzung wenigstens ein Additiv ausgewählt aus der Gruppe bestehend aus den Thermostabilisatoren, den Entformungsmitteln und den UV-Absorbern, vorzugsweise in einer Gesamtmenge von 0,01 Gew.% bis 2,0 Gew.%, bezogen auf die Gesamtmenge der Komponenten A, B und C. Besonders bevorzugt sind Thermostabilisatoren.

In einer bevorzugten Ausführungsform enthält die erfindungsgemäße Zusammensetzung wenigstens einen anorganischen Füllstoff.

In einer weiteren bevorzugten Ausführungsform enthält die erfindungsgemäße Zusammensetzung 0,002 bis 0,2 Gew.-% Thermostabilisator, 0,01 Gew.-% bis 1,00 Gew.-% UV-Stabilisator und 0,05 Gew.-% bis 2,00 Gew.-% Entformungsmittel.

Die erfindungsgemäßen Copolycarbonat-Zusammensetzungen werden auf üblichen Maschinen wie beispielsweise Mehrwellenextruder durch Compoundierung gegebenenfalls unter Zugabe von Additiven und anderen Zuschlagstoffen bei Temperaturen zwischen 280°C und 360°C hergestellt.

Die erfindungsgemäßen Copolycarbonat-Zusammensetzungen können auf üblichen Maschinen, beispielsweise auf Extrudern oder Spritzgussmaschinen, zu beliebigen Formkörpern, bzw. Formteile zu Folien oder Platten oder Flaschen, in üblicher Weise verarbeitet werden.

Die erfindungsgemäßen Copolycarbonat-Zusammensetzungen, gegebenenfalls in Abmischung mit anderen Thermoplasten und/oder üblichen Zusatzstoffen, können zu beliebigen Formkörpern/Extrudaten verarbeitet überall dort eingesetzt werden, wo bereits bekannte Polycarbonate, Polyestercarbonate und Polyester eingesetzt werden:
1. Sicherheitsscheiben, die bekanntlich in vielen Bereichen von Gebäuden, Fahrzeugen und Flugzeugen erforderlich sind, sowie als Schilde von Helmen.
2. Herstellung von Folien und Folienlaminaten.
3. Automobilscheinwerfer, bezels, Blinker, Reflektoren (Bauteile mit reduzierten thermischen Ausdehnungskoeffizienten)
4. Als transluzente Kunststoffe mit einem Gehalt an Glasfasern für lichttechnische Zwecke Als transluzente Kunststoffe mit einem Gehalt an Bariumsulfat, Titandioxid und oder Zirkoniumoxid bzw. hoch-reflektierende opake Zusammensetzungen (high reflectance) und daraus hergestellte Bauteile.
5. Zur Herstellung von Präzisionsspritzgußteilen, wie beispielsweise Linsen, Kollimatoren, Linsenhalterungen, Lichtleitelementen und LED-Anwendungen.
6. Als Elektroisolierstoffe für elektrische Leiter und für Steckergehäuse sowie Steckverbinder
7. Gehäuse für elektrische Geräte
8. Schutzbrillen, Visiere
9. Für medizinische Anwendungen, Medical Devices, z.B. Oxygenatoren, Dialysatoren (Hohlfaserdialysatoren), 3-Wege-Hähne, Schlauchverbinder, Blutfilter, Injektionssysteme, Inhalatoren, Ampullen
10. Extrudierte Formkörper wie Platten und Folien
11. LED-Anwendungen (Sockel, Reflektoren, heat sinks),
12. Als Feedstock für Compounds oder als Blendpartner bzw. Komponente in Blendzusammensetzungen und daraus hergestellten Bauteilen

Die Compounds, Blends, Formkörper, Extrudate, Folien und Folienlaminate aus den erfindungsgemäßen Copolycarbonat-Zusammensetzungen sind ebenfalls Gegenstand dieser Anmeldung, genauso wie Formteile, Extrudate und Folien enthaltend Coextrusionsschichten aus den erfindungsgemäßen Copolycarbonat-Zusammensetzungen.

Die erfindungsgemäßen Zusammensetzungen zeichnen sich insbesondere dadurch aus, dass sie aufgrund ihres Gehalt an oxidiertem säuremodifizierten Polyethylenwachs über ausgezeichnete Fließeigenschaften verfügen.

Ein weiterer Gegenstand der vorliegenden Erfindung ist daher auch die Verwendung eines oder mehrerer der vorgehend beschriebenen oxidierten säuremodifizierten Polyethylenwachse zur Verbesserung der Fließfähigkeit von Zusammensetzungen umfassend ein Copolycarbonat oder einen Blend aus dem Copolycarbonat und einem weiteren Homo-oder Copolycarbonat (Komponente A) und gegebenenfalls einen oder mehrere Zusatzstoffe (Komponente C).

Die nachfolgenden Beispiele sollen die Erfindung illustrieren, ohne sie jedoch einzuschränken.

### Beispiele

### Verwendete Rohstoffe:

**Komponente A** ist ein Blend aus **PC1** und **PC2** (Beispiele 1-4), Copolycarbonat **PC3** oder **PC4** (Beispiele 5 bis 12) oder eines der Copolycarbonate **PC5** bis **PC11** (siehe Tabelle 7, Beispiele 13-40).
- **PC 1**: ist ein kommerziell erhältliches Copolycarbonat auf Basis von Bisphenol A und Bisphenol TMC mit einem MVR von 18 cm³/10 min (330°C/2,16 kg) und einer Erweichungstemperatur (VST/B 120) von 183°C (Apec 1895 von Bayer MaterialScience AG).
- **PC 2**: ist ein Polycarbonatpulver auf Basis von Bisphenol A mit einem MVR von 6 cm³/10 min (300°C/1,2 kg). Es dient zur besseren Einarbeitung (Dosierung) des PE-Wachses.
- **PC 3**: Lexan XHT2141; high heat Copolycarbonat auf Basis von Bisphenol A und Bisphenol der Formel (Ib') mit R³ = Phenyl von Sabic Innovative Plastics mit einem MVR von 43 cm³/10 min (330 °C, 2,16 kg).
- **PC 4**: Lexan XHT4143; UV geschütztes high heat Copolycarbonat auf Basis von Bisphenol A und Bisphenol der Formel (Ib') mit R³ = Phenyl von Sabic Innovative Plastics.

**Komponente B** (PE Wachs): Oxidiertes säuremodifiziertes Polyethylenwachs mit einem Molekulargewicht von 4000 g/mol, einer Säurezahl von 1 mg KOH/g, einem Kristallinitätsgrad von 80 % und einem Schmelzpunkt (DSC) von 121 °C sowie einer Schmelzeviskosität (bei 140 °C) von 650 mPa*s. Es wurde Hi-Wax 405MP der Firma Mitsui Chemicals Inc. verwendet. Der Oxidationsindex OI wurde IR-spektroskopisch bestimmt und beträgt 55,4. Die Bestimmung erfolgte mit einem handelsüblichen FT-IR-Spekrometer, z. B. Nicolet 5700 oder FT-IR-Gerät 20DX von Thermo Fisher Scientific. Es wurden die Flächen des Peaks zwischen 1750 cm⁻¹ und 1680 cm⁻¹ (Carbonyl) ins Verhältnis gesetzt zu der Fläche des Peaks zwischen 1400 cm⁻¹ und 1330 cm⁻¹ (Aliphaten CHx). Die Berechnung erfolgte gemäß: Fläche C=O / Fläche Aliphat ^{∗} 100.

### Synthese des Bisphenols der Formel (1b') mit R³ = Methyl:

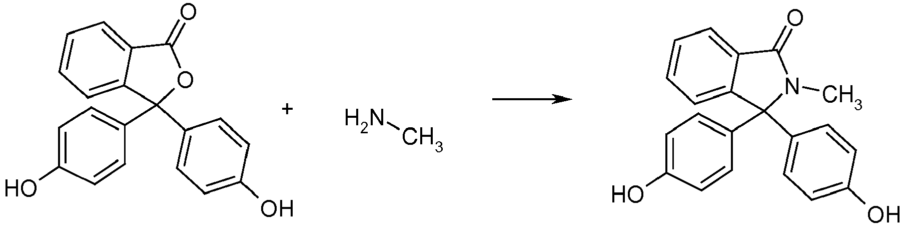

In einem Planschliffreaktor wird eine Lösung aus 2 kg (20,2 mol) N-Methylpyrrolidon (NMP) und 1273,3 g (4 mol) Phenolphtalein vorgelegt. Unter Rühren wird 2 Liter Wasser und anschließend 18 mol einer 40 %-igen wässrigen Methylaminlösung zugegeben. Bei Zugabe des Methylamins verfärbt sich die Reaktionslösung dabei violett. Unter Nutzung eines Trockeneiskühlers wird danach für 8 Stunden bei 82 °C nachgerührt. Die Färbung des Reaktionsansatzes verändert sich dabei ins dunkel-gelbliche. Nach Reaktionsende fällt man den Reaktionsansatz mittels eines Tropftrichters unter Rühren in eine salzsaure Wasservorlage.

Das weiß ausgefallene Reaktionsprodukt wird mit 2 Liter Wasser aufgeschlämmt und anschließend mittels einer G3-Fritte abgesaugt. Das erhaltene Rohprodukt wird in 3,5 Liter einer verdünnten Natronlauge (16 mol) wieder gelöst und wiederum in einer salzsauren Wasservorlage ausgefällt. Das umgefällte Rohprodukt wird mehrmals mit 2 Liter Wasser aufgeschlämmt und danach jeweils abgesaugt. Diese Waschprozedur wird so lange wiederholt, bis die Leitfähigkeit des Waschwassers kleiner 15 µS ist.

Das so erhaltene Produkt wird bei 90 °C im Vakuumtrockenschrank bis zur Massenkonstanz getrocknet.

Man erhielt nach 4-maliger Experimentdurchführung jeweils folgende Ausbeuten:
1a) 950 g eines weißen Feststoffes
1b) 890 g eines weißen Feststoffes
1c) 1120 g eines weißen Feststoffes
1d) 1050 g eines weißen Feststoffes
(Schmelzpunkt 264 °C)

Die Charakterisierung des erhaltenen Bisphenols erfolgte mittels ¹H-NMR-Spektroskopie.

### Synthese von Copolycarbonat basierend auf einem Bisphenol der Formel (1b') mit R³ = Methyl und Bisphenol A:

Zu einer mit Stickstoff inertisierten Lösung von 532,01 g (1,6055 mol) Bisphenol A (BPA), 2601,36 g (11,39 mol) Bisphenol aus Beispiel 1, 93,74 g (0,624 mol, 4,8 mol-% bzgl. Diphenole) p-tert.-Butylphenol (BUP) als Kettenabbrecher und 1196 g (29,9 mol) Natriumhydroxid in 25,9 Liter Wasser werden 11,79 Liter Methylenchlorid und 14,1 Liter Chlorbenzol hinzugegeben. Bei einem pH-Wert von 12.5 - 13.5 und 20 °C leitet man 2,057 kg (20,8 mol) Phosgen ein. Um den pH-Wert nicht unter 12,5 fallen zu lassen, wurde während der Phosgenierung 30 %-ige Natronlauge zugegeben. Nach beendeter Phosgenierung und Spülung mit Stickstoff rührt man für weitere 30 Minuten und gibt dann 14,7 g (0.13 mol, 1 mol-% bzgl. Diphenole) N-Ethylpiperidin als Katalysator zu und lässt 1 Stunde nachrühren. Die organische Phase wird nach Abtrennen der wässrigen Phase und Ansäuern mit Phosphorsäure mittels eines Separators mehrmals mit Wasser salzfrei gewaschen Die organische Phase wird abgetrennt und einem Lösungsmittelaustausch Chlorbenzol gegen Methylenchlorid unterworfen. Die aufkonzentrierte Copolycarbonatlösung in Chlorbenzol wird anschließend mit Hilfe eines Ausdampfextruders vom Lösungsmittel befreit. Die erhaltenen Polycarbonatschmelzestränge werden in einem Wasserbad gekühlt, abgezogen und abschließend granuliert. Man erhält transparentes Polycarbonatgranulat.

### Synthese der Copolycarbonate PC5 bis PC11

Die Copolycarbonate PC-7 bis PC-11 wurden analog der vorstehenden Vorschrift zur Herstellung von Copolycarbonat basierend auf einem Bisphenol der Formel (1b') mit R³ = Methyl und Bisphenol A hergestellt (Stöchiometrie siehe Tabelle 7).

### Synthese der Copolycarbonat-Zusammensetzungen der Beispiele 1-4

Die Copolycarbonat-Zusammensetzungen der Beispiele 1-4 auf Basis der Rohstoffe PC1 und PC2 sowie Komponente B werden auf einem Zweiwellenextruder bei 300 °C in den in Tabelle 1 aufgeführten Rezepturen vermischt. Die so erhalten Polymerzusammensetzungen werden granuliert und stehen für polymerphysikalische Charakterisierungen zur Verfügung.

### Synthese der Copolycarbonat-Zusammensetzungen der Beispiele 5-40

Die Polycarbonat-Zusammensetzungen der Beispiele 5 bis 40 werden auf einem Miniextruder der Fa. DSM auf Basis der angegebenen Rohstoffe hergestellt. Die Schmelzetemperatur betrug 330°C. Die so erhalten Polymerzusammensetzungen werden granuliert und stehen für polymerphysikalische Charakterisierungen zur Verfügung.

### Charakterisierung der erfindungsgemäßen Formmassen (Testmethoden):

Charakterisierung der erfindungsgemäßen Formmassen (Testmethoden): Die Bestimmung der Schmelze-Volumenfließrate (MVR) erfolgte nach ISO 1133 (bei einer Prüftemperatur von 330°C, Masse 2,16 kg) mit dem Gerät Zwick 4106 der Firma Roell.

Die Vicat-Erweichungstemperatur VST/B120 als Maß für die Wärmeformbeständigkeit wurde gemäß ISO 306 an Prüfkörpern der Abmessung 80 x 10 x 4 mm mit einer Stempellast von 50 N und einer Aufheizgeschwindigkeit von 50°C/h bzw von 120 °C/h mit dem Gerät Coesfeld Eco 2920 der Firma Coesfeld Materialtest bestimmt.

Der Zug-E-Modul wurde gemäß ISO 527 an einseitig angespritzten Schulterstäben mit einem Kern der Dimension 80 x 10 x 4 mm gemessen

Fließspirale: Entweder wird eine definierte Länge eingestellt oder ein definierter Druck vorgegeben. Die Probekörpergeometrie beträgt 8x2 mm, die Fließlänge ergibt sich aus dem Versuch.

Der Vergleichswert wird auf eine definierte Fließlänge eingestellt. Die zu messenden Proben werden unter identischen Bedingungen charakterisiert. Größere Zahlenwerte zeigen eine bessere Fließfähigkeit an (längere Fließlänge).

Die rheologischen Prüfungen wurden mit dem Kegel-Platte Rheometer MCR 301 mit Messkegel CP 25 und den nachfolgend angegebenen Bedingungen durchgeführt:
Messmethode: Oszillation - Kegel-Platte
Frequenz: 75 bis 0,08 Hz = Kreisfrequenz von 471 bis 0,5 [1/s]
Deformation: 10% - 20 Messpunkte
Temperaturen: 300°C, 280°C und 260°C, +- 0,3°C.

**Tabelle 1: Zusammensetzungen und experimentelle Daten der Beispiele 1-4**

| **Beispiele:** | | **1 (Vergleich)** | **2** | **3** | **4** |
|---|---|---|---|---|---|
| PC-1 | % | 93 | 93 | 93 | 93 |
| PC-2 | % | 7 | 5,5 | 4 | 2,5 |
| PE-Wachs | % | | 1,5 | 3 | 4,5 |
| MVR 330°C/2,16kg | ml/10min | 15,8 | 17,0 | 18,1 | 21,0 |
| Vicat VSTB 120 | °C | 181,4 | 180,0 | 178,9 | 178,4 |
| E-Modul | N/mm² | 2524 | 2500 | 2454 | 2410 |
| Fließspirale | cm | 25* | 26,5 | 34 | 56 |

| | | | | | |
|---|---|---|---|---|---|
| Die %-Angaben sind jeweils Angaben in Gew.-%. | | | | | |

Man erkennt deutlich, dass der MVR durch die Zugabe des PE-Wachses signifikant erhöht ist, d. h. die Schmelzviskosität ist reduziert und die Fließfähigkeit dadurch erhöht. Die Vicat-Temperatur wird durch Zugabe des PE-Wachses nur leicht reduziert, bleibt aber selbst bei großen Menge einem hohen Bereich. Der Zugmodul wird durch Zugabe des PE-Wachses nur leicht reduziert, bleibt aber selbst bei großen Menge einem hohen Bereich. Man erkennt an den Fließspiralwerten, dass eine deutliche Verbesserung der Fließfähigkeit durch die Zugabe des oxidierten Polyethylenwachses erzielt wird.

**Tabelle 2: Schmelzviskositäten der Zusammensetzungen der Beispiele 1-4**

| Die Werte in der folgenden Tabelle sind jeweils angegeben zu den Scherraten in [1/sec]. | | | | | |
|---|---|---|---|---|---|
| **Beispiele** | | **1 (Vergleich)** | **2** | **3** | **4** |
| Schmelzevisk. bei 300°C | | | | | |
| eta 50 | Pa · s | 1683 | 948 | 617 | 410 |
| eta 100 | Pa · s | 1506 | 813 | 525 | 295 |
| eta 200 | Pa · s | 1268 | 676 | 447 | 219 |
| eta 500 | Pa · s | 851 | 537 | 332 | 139 |
| eta 1000 | Pa · s | 608 | 424 | 275 | 96 |
| eta 1500 | Pa · s | 483 | 376 | 234 | 82 |
| eta 5000 | Pa · s | 223 | 196 | 138 | 43 |

| Schmelzevisk. bei 320°C | | | | | |
|---|---|---|---|---|---|
| eta 50 | Pa · s | 919 | 646 | 449 | 282 |
| eta 100 | Pa · s | 861 | 540 | 372 | 217 |
| eta 200 | Pa · s | 784 | 457 | 309 | 148 |
| eta 500 | Pa · s | 607 | 339 | 222 | 105 |
| eta 1000 | Pa · s | 440 | 262 | 176 | 72 |
| eta 1500 | Pa · s | 347 | 233 | 150 | 59 |
| eta 5000 | Pa · s | 157 | 139 | 81 | 33 |

| Schmelzevisk. bei 330°C | | | | | |
|---|---|---|---|---|---|
| eta 50 | Pa · s | 604 | 490 | 331 | 257 |
| eta 100 | Pa · s | 593 | 437 | 288 | 180 |
| eta 200 | Pa · s | 556 | 368 | 229 | 135 |
| eta 500 | Pa · s | 457 | 281 | 180 | 96 |
| eta 1000 | Pa · s | 352 | 217 | 142 | 68 |
| eta 1500 | Pa · s | 286 | 186 | 118 | 54 |
| eta 5000 | Pa · s | 135 | 114 | 63 | 29 |

| Schmelzevisk. bei 340°C | | | | | |
|---|---|---|---|---|---|
| eta 50 | Pa · s | 439 | 347 | 269 | 219 |
| eta 100 | Pa · s | 429 | 316 | 229 | 167 |
| eta 200 | Pa · s | 410 | 267 | 195 | 123 |
| eta 500 | Pa · s | 347 | 209 | 146 | 86 |
| eta 1000 | Pa · s | 280 | 168 | 117 | 65 |
| eta 1500 | Pa · s | 234 | 148 | 99 | 50 |
| eta 5000 | Pa · s | 116 | 93 | 53 | 26 |

| Schmelzevisk. bei 360°C | | | | | |
|---|---|---|---|---|---|
| eta 50 | Pa · s | 215 | 198 | 190 | 135 |
| eta 100 | Pa · s | 214 | 186 | 170 | 107 |
| eta 200 | Pa · s | 213 | 166 | 140 | 80 |
| eta 500 | Pa · s | 193 | 127 | 105 | 56 |
| eta 1000 | Pa · s | 166 | 102 | 78 | 44 |
| eta 1500 | Pa · s | 148 | 91 | 67 | 36 |
| eta 5000 | Pa · s | 85 | 61 | 40 | 18 |

Man erkennt an den Schmelzviskositäten , dass eine deutliche Verbesserung der Fließfähigkeit durch die Zugabe des oxidierten Polyethylenwachses bei sämtlichen Temperaturen des verarbeitungsrelevanten Bereichs und über alle Scherraten erzielt wird.

**Tabelle 3: Zusammensetzung der Compounds zu den Beispielen 5 - 12**

| **Beispiel** | | **5 (Vergleich)** | **6** | **7** | **8** | **9 (Vergleich)** | **10** | **11** | **12** |
|---|---|---|---|---|---|---|---|---|---|
| PC-3 | % | 100 | 99,5 | 99,0 | 98,0 | | | | |
| PC-4 | % | | | | | 100 | 99,5 | 99,0 | 98,0 |
| PE Wax | % | | 0,5 | 1,0 | 2,0 | | 0,5 | 1,0 | 2,0 |
| Tg | [°C] | 164,1 | 165,0 | 164,9 | 164,7 | 183,9 | 183,4 | 183,8 | 184,3 |

| | | | | | | | | | |
|---|---|---|---|---|---|---|---|---|---|
| Die %-Angaben sind jeweils Angaben in Gew.-%. | | | | | | | | | |

**Tabelle 4: Schmelzviskosität bei einer Kreisfrequenz von 471 bis 0,503 [Hz]**

| **Beispiel** | | **5 (Vergl.)** | **6** | **7** | **8** | **9 (Vergl.)** | **10** | **11** | **12** |
|---|---|---|---|---|---|---|---|---|---|
| **Rheologie Kegel / Platte** Schmelzevisk. bei 260°C [Hz] | | | | | | | | | |
| 471 | Pa · s | 1260 | 1310 | 1310 | 1240 | 2080 | 2080 | 1940 | 1450 |
| 329 | Pa · s | 1520 | 1580 | 1570 | 1480 | 2570 | 2600 | 2430 | 1960 |
| 229 | Pa · s | 1780 | 1860 | 1840 | 1730 | 3120 | 3170 | 3030 | 2340 |
| 160 | Pa · s | 2050 | 2140 | 2120 | 1990 | 3720 | 3790 | 3680 | 2980 |
| 112 | Pa · s | 2320 | 2430 | 2410 | 2260 | 4370 | 4470 | 4400 | 3810 |
| 77,8 | Pa · s | 2580 | 2700 | 2680 | 2520 | 5160 | 5290 | 5250 | 4780 |
| 54,3 | Pa · s | 2830 | 2950 | 2940 | 2760 | 6030 | 6180 | 6180 | 5730 |
| 37,9 | Pa · s | 3050 | 3180 | 3170 | 2970 | 6930 | 7100 | 7160 | 6620 |
| 26,4 | Pa · s | 3230 | 3380 | 3360 | 3160 | 7850 | 8040 | 8160 | 7560 |
| 18,4 | Pa · s | 3390 | 3540 | 3530 | 3310 | 8770 | 8980 | 9180 | 8520 |
| 12,9 | Pa · s | 3510 | 3670 | 3660 | 3430 | 9670 | 9950 | 10200 | 9640 |
| 8,97 | Pa · s | 3600 | 3760 | 3760 | 3530 | 10600 | 10900 | 11200 | 10500 |
| 6,25 | Pa · s | 3660 | 3840 | 3840 | 3610 | 11500 | 11800 | 12100 | 11200 |
| 4,36 | Pa · s | 3710 | 3890 | 3900 | 3670 | 12300 | 12500 | 12900 | 11800 |
| 3,04 | Pa · s | 3750 | 3940 | 3950 | 3730 | 12900 | 13000 | 13400 | 12300 |
| 2,12 | Pa · s | 3770 | 3960 | 3990 | 3770 | 13300 | 13400 | 13800 | 12600 |
| 1,48 | Pa · s | 3790 | 3990 | 4020 | 3820 | 13600 | 13700 | 14200 | 12900 |
| 1,03 | Pa · s | 3800 | 4010 | 4050 | 3860 | 13800 | 13900 | 14400 | 13200 |
| 0,721 | Pa · s | 3810 | 4020 | 4070 | 3890 | 14000 | 14100 | 14700 | 13400 |
| 0,503 | Pa · s | 3810 | 4030 | 4080 | 3910 | 14100 | 14200 | 14800 | 13500 |

| Schmelzevisk. bei 280°C [Hz] | | | | | | | | | |
|---|---|---|---|---|---|---|---|---|---|
| 471 | Pa · s | 570 | 621 | 613 | 594 | 815 | 934 | 840 | 866 |
| 329 | Pa · s | 695 | 710 | 696 | 675 | 1060 | 1130 | 1070 | 1090 |
| 229 | Pa · s | 800 | 794 | 776 | 751 | 1320 | 1340 | 1300 | 1310 |
| 160 | Pa · s | 892 | 871 | 850 | 823 | 1590 | 1560 | 1530 | 1540 |
| 112 | Pa · s | 967 | 940 | 917 | 887 | 1860 | 1770 | 1750 | 1760 |
| 77,8 | Pa · s | 1030 | 1000 | 975 | 943 | 2100 | 1980 | 1960 | 1970 |
| 54,3 | Pa · s | 1080 | 1050 | 1020 | 991 | 2310 | 2180 | 2140 | 2160 |
| 37,9 | Pa · s | 1130 | 1090 | 1060 | 1030 | 2490 | 2350 | 2300 | 2330 |
| 26,4 | Pa · s | 1160 | 1120 | 1090 | 1060 | 2650 | 2500 | 2440 | 2480 |
| 18,4 | Pa · s | 1180 | 1150 | 1120 | 1080 | 2790 | 2620 | 2560 | 2600 |
| 12,9 | Pa · s | 1200 | 1160 | 1130 | 1100 | 2890 | 2710 | 2650 | 2700 |
| 8,97 | Pa · s | 1210 | 1180 | 1150 | 1110 | 2970 | 2780 | 2720 | 2780 |
| 6,25 | Pa · s | 1220 | 1180 | 1160 | 1130 | 3030 | 2840 | 2770 | 2840 |
| 4,36 | Pa · s | 1220 | 1190 | 1170 | 1140 | 3070 | 2870 | 2810 | 2880 |
| 3,04 | Pa · s | 1230 | 1200 | 1180 | 1160 | 3090 | 2900 | 2850 | 2930 |
| 2,12 | Pa · s | 1230 | 1200 | 1180 | 1170 | 3110 | 2920 | 2870 | 2960 |
| 1,48 | Pa · s | 1230 | 1200 | 1190 | 1180 | 3120 | 2940 | 2890 | 3000 |
| 1,03 | Pa · s | 1230 | 1200 | 1190 | 1180 | 3120 | 2950 | 2910 | 3030 |
| 0,721 | Pa · s | 1230 | 1200 | 1200 | 1190 | 3120 | 2950 | 2920 | 3050 |
| 0,503 | Pa · s | 1230 | 1200 | 1190 | 1190 | 3120 | 2950 | 2910 | 3070 |

| Schmelzevisk. bei 300°C [Hz] | | | | | | | | | |
|---|---|---|---|---|---|---|---|---|---|
| 471 | Pa · s | 366 | 334 | 344 | 327 | 558 | 545 | 510 | 526 |
| 329 | Pa · s | 399 | 362 | 374 | 355 | 648 | 625 | 577 | 599 |
| 229 | Pa · s | 430 | 387 | 401 | 380 | 731 | 698 | 641 | 668 |
| 160 | Pa · s | 457 | 408 | 424 | 401 | 804 | 765 | 700 | 730 |
| 112 | Pa · s | 479 | 426 | 442 | 418 | 868 | 825 | 752 | 785 |
| 77,8 | Pa · s | 496 | 439 | 457 | 431 | 923 | 876 | 796 | 832 |
| 54,3 | Pa · s | 510 | 449 | 469 | 441 | 967 | 918 | 832 | 869 |
| 37,9 | Pa · s | 520 | 457 | 478 | 449 | 1000 | 951 | 861 | 899 |
| 26,4 | Pa · s | 528 | 462 | 484 | 456 | 1030 | 977 | 882 | 922 |
| 18,4 | Pa · s | 533 | 466 | 490 | 461 | 1050 | 995 | 899 | 940 |
| 12,9 | Pa · s | 536 | 469 | 494 | 466 | 1060 | 1010 | 911 | 954 |
| 8,97 | Pa · s | 538 | 471 | 498 | 471 | 1070 | 1020 | 920 | 965 |
| 6,25 | Pa · s | 540 | 472 | 501 | 476 | 1070 | 1020 | 927 | 975 |
| 4,36 | Pa · s | 542 | 473 | 503 | 481 | 1070 | 1030 | 933 | 985 |
| 3,04 | Pa · s | 543 | 474 | 506 | 485 | 1080 | 1030 | 938 | 995 |
| 2,12 | Pa · s | 544 | 474 | 507 | 488 | 1080 | 1030 | 941 | 1000 |
| 1,48 | Pa · s | 545 | 475 | 509 | 491 | 1070 | 1030 | 943 | 1010 |
| 1,03 | Pa · s | 547 | 476 | 511 | 493 | 1070 | 1030 | 944 | 1010 |
| 0,721 | Pa · s | 549 | 477 | 514 | 495 | 1070 | 1030 | 944 | 1020 |
| 0,503 | Pa · s | 552 | 478 | 515 | 494 | 1070 | 1030 | 939 | 1010 |

Tabelle 4 zeigt, dass die Vergleichsbeispiele 5 und 9, die das Fließhilfsmittel nicht enthalten, im Gegensatz zu den erfindungsgemäßen Beispielen 6, 7, 8 und 10, 11, 12 bei den drei Messtemperaturen höhere Schmelzviskositäten aufweisen und damit über eine schlechtere Fließfähigkeit verfügen.

**Tabelle 5: Zusammensetzung der Copolycarbonate PC-5 - PC11**

| **Copolycarbonate Nr. basierend auf:** | **PC-5** | **PC-6** | **PC-7** | **PC-8** | **PC-9** | **PC-10** | **PC-11** |
|---|---|---|---|---|---|---|---|
| Bisphenol gemäß Formel (1b') mit R³ = Methyl | | | | | | | |
| [mol-%] | 77,93 | 78,5 | 77,5 | 76,5 | 80 | 80 | 80 |
| [Gew.-%] | 70,9 | 71,6 | 70,4 | 69,2 | 73,4 | 73,4 | 73,4 |

| Bisphenol A (BPA) | | | | | | | |
|---|---|---|---|---|---|---|---|
| [mol-%] | 22,07 | 21,5 | 22,5 | 23,5 | 20 | 20 | 20 |
| [Gew.-%] | 29,1 | 28,4 | 29,6 | 30,8 | 26,6 | 26,6 | 26,6 |
| Glastemperatur Tg [°C] | 179,4 | 179,6 | 179,6 | 182,3 | 175,3 | 176,1 | 173,9 |
| ηᵣₑₗ | - | 1,234 | 1,225 | 1,237 | 1,216 | 1,228 | 1,218 |

**Tabelle 6: Zusammensetzung der Compounds zu den Beispielen 13 - 40**

| **Beispiel** | **PC-9** | **PC-10** | **PC-11** | **PC-6** | **PC-7** | **PC-8** | **PC-5** | **PE Wachs** | **Tg** |
|---|---|---|---|---|---|---|---|---|---|
| | % | % | % | % | % | % | % | % | °C |
| **13 (Vergleich)** | 100 | | | | | | | | 176,7 |
| **14** | 99,5 | | | | | | | 0,5 | 175,5 |
| **15** | 99,0 | | | | | | | 1 | 175,3 |
| **16** | 98,0 | | | | | | | 2 | 175,3 |
| **17 (Vergleich)** | | 100 | | | | | | | 177,1 |
| **18** | | 99,5 | | | | | | 0,5 | 176,2 |
| **19** | | 99,0 | | | | | | 1 | 174,8 |
| **20** | | 98,0 | | | | | | 2 | 175,0 |
| **21 (Vergleich)** | | | 100 | | | | | | 173,4 |
| **22** | | | 99,5 | | | | | 0,5 | 173,6 |
| **23** | | | 99,0 | | | | | 1 | 172,7 |
| **24** | | | 98,0 | | | | | 2 | 172,9 |
| **25 (Vergleich)** | | | | 100 | | | | | 179,0 |
| **26** | | | | 99,5 | | | | 0,5 | 177,7 |
| **27** | | | | 99,0 | | | | 1 | 176,4 |
| **28** | | | | 98,0 | | | | 2 | 176,2 |
| **29 (Vergleich)** | | | | | 100 | | | | 180,1 |
| **30** | | | | | 99,5 | | | 0,5 | 179,5 |
| **31** | | | | | 99,0 | | | 1 | 178,7 |
| **32** | | | | | 98,0 | | | 2 | 178,5 |
| **33 (Vergleich)** | | | | | | 100 | | | 184,3 |
| **34** | | | | | | 99,5 | | 0,5 | 183,2 |
| **35** | | | | | | 99,0 | | 1 | 184,8 |
| **36** | | | | | | 98,0 | | 2 | 183,2 |
| **37 (Vergleich)** | | | | | | | 100 | | 180,3 |
| **38** | | | | | | | 99,5 | 0,5 | 179,3 |
| **39** | | | | | | | 99,0 | 1 | 178,9 |
| **40** | | | | | | | 98,0 | 2 | 178,3 |

| | | | | | | | | | |
|---|---|---|---|---|---|---|---|---|---|
| Die %-Angaben sind jeweils Angaben in Gew.-%. | | | | | | | | | |

**Tabelle 7: Schmelzviskosität bei einer Kreisfrequenz von 471 bis 0,503 [Hz]:**

| **Beispiel** | | **13 (Ver-(Vergleich)** | **14** | **15** | **16** | **17 (Vergleich)** | **18** | **19** | **20** |
|---|---|---|---|---|---|---|---|---|---|
| **Rheologie Kegel / Platte** Schmelzevisk. bei 260°C [Hz] | | | | | | | | | |
| 471 | Pa · s | 366 | 346 | 327 | 323 | 259 | 207 | 170 | 157 |
| 329 | Pa · s | 399 | 377 | 356 | 350 | 280 | 221 | 180 | 165 |
| 229 | Pa · s | 429 | 407 | 383 | 376 | 299 | 234 | 189 | 172 |
| 160 | Pa · s | 456 | 433 | 406 | 398 | 315 | 244 | 196 | 178 |
| 112 | Pa · s | 479 | 456 | 425 | 417 | 330 | 253 | 203 | 183 |
| 77,8 | Pa · s | 497 | 475 | 441 | 432 | 341 | 261 | 208 | 188 |
| 54,3 | Pa · s | 511 | 490 | 453 | 445 | 351 | 268 | 212 | 192 |
| 37,9 | Pa · s | 521 | 501 | 463 | 454 | 359 | 273 | 216 | 198 |
| 26,4 | Pa · s | 529 | 510 | 471 | 463 | 365 | 278 | 221 | 207 |
| 18,4 | Pa · s | 533 | 516 | 476 | 469 | 369 | 282 | 224 | 217 |
| 12,9 | Pa · s | 535 | 520 | 479 | 474 | 373 | 285 | 228 | 231 |
| 8,97 | Pa · s | 536 | 523 | 482 | 479 | 377 | 290 | 232 | 252 |
| 6,25 | Pa · s | 536 | 524 | 484 | 484 | 380 | 294 | 237 | 283 |
| 4,36 | Pa · s | 535 | 525 | 485 | 488 | 383 | 298 | 241 | 329 |
| 3,04 | Pa · s | 534 | 526 | 485 | 491 | 386 | 303 | 246 | 398 |
| 2,12 | Pa · s | 531 | 525 | 484 | 492 | 390 | 309 | 252 | 505 |
| 1,48 | Pa · s | 529 | 525 | 483 | 493 | 395 | 316 | 259 | 659 |
| 1,03 | Pa · s | 527 | 527 | 482 | 492 | 401 | 325 | 267 | 888 |
| 0,721 | Pa · s | 524 | 529 | 481 | 490 | 409 | 335 | 276 | 1230 |
| 0,503 | Pa · s | 519 | 531 | | 485 | 419 | 346 | 286 | 1700 |

| Schmelzevisk. bei 280°C [Hz] | | | | | | | | | |
|---|---|---|---|---|---|---|---|---|---|
| 471 | Pa · s | 111 | 86 | 87 | 76 | 414 | 358 | 263 | 201 |
| 329 | Pa · s | 184 | 82 | 73 | 75 | 458 | 393 | 285 | 216 |
| 229 | Pa · s | 832 | 69 | 95 | 55 | 502 | 427 | 305 | 231 |
| 160 | Pa · s | 929 | 93 | 94 | 75 | 542 | 457 | 323 | 243 |
| 112 | Pa · s | 1020 | 945 | 865 | 854 | 577 | 484 | 338 | 254 |
| 77,8 | Pa · s | 1100 | 1020 | 928 | 914 | 608 | 507 | 350 | 263 |
| 54,3 | Pa · s | 1170 | 1080 | 983 | 966 | 635 | 526 | 360 | 271 |
| 37,9 | Pa · s | 1230 | 1130 | 1030 | 1010 | 656 | 541 | 368 | 278 |
| 26,4 | Pa · s | 1280 | 1170 | 1070 | 1050 | 674 | 554 | 374 | 286 |
| 18,4 | Pa · s | 1330 | 1200 | 1100 | 1080 | 686 | 563 | 380 | 290 |
| 12,9 | Pa · s | 1350 | 1230 | 1120 | 1100 | 696 | 570 | 385 | 296 |
| 8,97 | Pa · s | 1370 | 1250 | 1140 | 1120 | 703 | 576 | 390 | 302 |
| 6,25 | Pa · s | 1390 | 1260 | 1150 | 1130 | 708 | 580 | 395 | 309 |
| 4,36 | Pa · s | 1400 | 1270 | 1160 | 1150 | 712 | 584 | 400 | 317 |
| 3,04 | Pa · s | 1410 | 1280 | 1170 | 1160 | 716 | 588 | 405 | 325 |
| 2,12 | Pa · s | 1410 | 1280 | 1180 | 1170 | 718 | 592 | 410 | 333 |
| 1,48 | Pa · s | 1410 | 1290 | 1180 | 1180 | 722 | 597 | 416 | 343 |
| 1,03 | Pa · s | 1410 | 1290 | 1180 | 1180 | 725 | 603 | 424 | 353 |
| 0,721 | Pa · s | 1410 | 1280 | 1180 | 1190 | 729 | 612 | 434 | 365 |
| 0,503 | Pa · s | 1410 | 1280 | 1170 | 1180 | 733 | 624 | 446 | 379 |

| Schmelzevisk. bei 300°C [Hz] | | | | | | | | | |
|---|---|---|---|---|---|---|---|---|---|
| 471 | Pa · s | 860 | 1040 | 880 | 1010 | 970 | 674 | 729 | 741 |
| 329 | Pa · s | 1150 | 1420 | 1290 | 1400 | 1200 | 906 | 835 | 879 |
| 229 | Pa · s | 1480 | 1820 | 1640 | 1800 | 1410 | 1120 | 945 | 1010 |
| 160 | Pa · s | 1910 | 2300 | 2160 | 2230 | 1610 | 1290 | 1050 | 1130 |
| 112 | Pa · s | 2400 | 2740 | 2660 | 2620 | 1790 | 1440 | 1150 | 1250 |
| 77,8 | Pa · s | 2850 | 3130 | 3070 | 2980 | 1970 | 1570 | 1230 | 1350 |
| 54,3 | Pa · s | 3200 | 3500 | 3430 | 3320 | 2140 | 1690 | 1310 | 1440 |
| 37,9 | Pa · s | 3530 | 3850 | 3760 | 3650 | 2280 | 1790 | 1370 | 1520 |
| 26,4 | Pa · s | 3830 | 4170 | 4070 | 3940 | 2410 | 1870 | 1420 | 1590 |
| 18,4 | Pa · s | 4100 | 4450 | 4340 | 4200 | 2510 | 1940 | 1470 | 1640 |
| 12,9 | Pa · s | 4340 | 4700 | 4580 | 4430 | 2600 | 2000 | 1500 | 1690 |
| 8,97 | Pa · s | 4540 | 4900 | 4770 | 4620 | 2660 | 2040 | 1520 | 1720 |
| 6,25 | Pa · s | 4700 | 5070 | 4930 | 4780 | 2710 | 2070 | 1540 | 1750 |
| 4,36 | Pa · s | 4830 | 5200 | 5060 | 4910 | 2750 | 2100 | 1560 | 1780 |
| 3,04 | Pa · s | 4940 | 5300 | 5160 | 5020 | 2770 | 2110 | 1570 | 1810 |
| 2,12 | Pa · s | 5020 | 5380 | 5240 | 5110 | 2790 | 2120 | 1580 | 1850 |
| 1,48 | Pa · s | 5080 | 5430 | 5300 | 5180 | 2800 | 2130 | 1600 | 1890 |
| 1,03 | Pa · s | 5110 | 5460 | 5340 | 5250 | 2810 | 2140 | 1610 | 1930 |
| 0,721 | Pa · s | 5130 | 5470 | 5370 | 5290 | 2810 | 2150 | 1620 | 1970 |
| 0,503 | Pa · s | 5130 | 5460 | 5360 | 5310 | 2800 | 2140 | 1630 | 2050 |
| | | | | | | | | | |

| **Beispiel** | | **21 (Vergleich)** | **22** | **23** | **24** | **25 (Vergleich)** | **26** | **27** | **28** |
|---|---|---|---|---|---|---|---|---|---|
| **Rheologie Kegel / Platte** Schmelzevisk. bei 260°C [Hz] | | | | | | | | | |
| 471 | | 132 | 85 | 71 | 71 | 296 | 221 | 182 | 133 |
| 329 | Pa · s | 140 | 89 | 73 | 73 | 322 | 238 | 194 | 140 |
| 229 | Pa · s | 146 | 92 | 75 | 75 | 348 | 254 | 204 | 146 |
| 160 | Pa · s | 152 | 95 | 76 | 76 | 371 | 268 | 211 | 150 |
| 112 | Pa · s | 157 | 96 | 77 | 76 | 390 | 279 | 217 | 154 |
| 77,8 | Pa · s | 160 | 98 | 77 | 77 | 407 | 289 | 222 | 156 |
| 54,3 | Pa · s | 164 | 99 | 78 | 77 | 420 | 296 | 225 | 158 |
| 37,9 | Pa · s | 167 | 100 | 78 | 78 | 431 | 301 | 227 | 159 |
| 26,4 | Pa · s | 171 | 102 | 79 | 79 | 439 | 305 | 229 | 161 |
| 18,4 | Pa · s | 173 | 102 | 79 | 79 | 444 | 307 | 230 | 162 |
| 12,9 | Pa · s | 176 | 103 | 80 | 80 | 448 | 308 | 231 | 163 |
| 8,97 | Pa · s | 180 | 104 | 80 | 80 | 451 | 309 | 231 | 165 |
| 6,25 | Pa · s | 186 | 105 | 81 | 81 | 452 | 309 | 231 | 166 |
| 4,36 | Pa · s | 194 | 108 | 82 | 82 | 454 | 309 | 231 | 167 |
| 3,04 | Pa · s | 206 | 111 | 83 | 84 | 455 | 309 | 231 | 169 |
| 2,12 | Pa · s | 222 | 116 | 85 | 86 | 456 | 309 | 231 | 171 |
| 1,48 | Pa · s | 244 | 123 | 89 | 89 | 458 | 310 | 233 | 173 |
| 1,03 | Pa · s | 272 | 133 | 93 | 93 | 461 | 311 | 235 | 177 |
| 0,721 | Pa · s | 307 | 147 | 98 | 99 | 466 | 314 | 238 | 183 |
| 0,503 | Pa · s | 354 | 167 | 105 | 105 | 472 | 317 | 244 | 191 |

| Schmelzevisk. bei 280°C | | | | | | | | | |
|---|---|---|---|---|---|---|---|---|---|
| 471 | | 321 | 259 | 225 | 206 | 751 | 619 | 489 | 480 |
| 329 | Pa · s | 343 | 277 | 240 | 218 | 860 | 705 | 582 | 542 |
| 229 | Pa · s | 362 | 294 | 253 | 229 | 970 | 788 | 656 | 599 |
| 160 | Pa · s | 379 | 308 | 264 | 238 | 1080 | 865 | 718 | 649 |
| 112 | Pa · s | 392 | 320 | 273 | 244 | 1170 | 935 | 770 | 693 |
| 77,8 | Pa · s | 401 | 329 | 280 | 250 | 1260 | 996 | 814 | 731 |
| 54,3 | Pa · s | 407 | 336 | 286 | 253 | 1340 | 1050 | 849 | 761 |
| 37,9 | Pa · s | 411 | 341 | 290 | 257 | 1400 | 1090 | 877 | 786 |
| 26,4 | Pa · s | 414 | 346 | 294 | 259 | 1450 | 1120 | 898 | 806 |
| 18,4 | Pa · s | 415 | 349 | 297 | 262 | 1490 | 1140 | 915 | 821 |
| 12,9 | Pa · s | 415 | 352 | 300 | 265 | 1520 | 1160 | 928 | 834 |
| 8,97 | Pa · s | 416 | 355 | 303 | 268 | 1540 | 1170 | 937 | 846 |
| 6,25 | Pa · s | 416 | 357 | 306 | 272 | 1550 | 1180 | 945 | 857 |
| 4,36 | Pa · s | 416 | 359 | 309 | 275 | 1560 | 1190 | 952 | 868 |
| 3,04 | Pa · s | 417 | 363 | 313 | 278 | 1570 | 1190 | 958 | 881 |
| 2,12 | Pa · s | 418 | 366 | 316 | 281 | 1570 | 1190 | 960 | 891 |
| 1,48 | Pa · s | 421 | 370 | 321 | 285 | 1570 | 1200 | 963 | 901 |
| 1,03 | Pa · s | 425 | 377 | 327 | 289 | 1570 | 1200 | 967 | 910 |
| 0,721 | Pa · s | 431 | 385 | 336 | 295 | 1570 | 1200 | 967 | 917 |
| 0,503 | Pa · s | 439 | 395 | 346 | 303 | 1570 | 1190 | 965 | 922 |

| Schmelzevisk. bei 300°C | | | | | | | | | |
|---|---|---|---|---|---|---|---|---|---|
| 471 | Pa · s | 648 | 533 | 507 | 489 | 913 | 1150 | 749 | 841 |
| 329 | Pa · s | 741 | 603 | 567 | 545 | 1260 | 1380 | 1030 | 985 |
| 229 | Pa · s | 831 | 669 | 623 | 598 | 1610 | 1630 | 1310 | 1140 |
| 160 | Pa · s | 917 | 730 | 675 | 648 | 2050 | 1890 | 1560 | 1290 |
| 112 | Pa · s | 997 | 784 | 720 | 691 | 2480 | 2160 | 1790 | 1450 |
| 77,8 | Pa · s | 1070 | 832 | 758 | 728 | 2850 | 2430 | 1980 | 1590 |
| 54,3 | Pa · s | 1130 | 871 | 788 | 758 | 3200 | 2700 | 2160 | 1720 |
| 37,9 | Pa · s | 1180 | 903 | 813 | 782 | 3520 | 2940 | 2320 | 1830 |
| 26,4 | Pa · s | 1220 | 928 | 831 | 800 | 3810 | 3150 | 2460 | 1920 |
| 18,4 | Pa · s | 1250 | 947 | 845 | 814 | 4070 | 3340 | 2570 | 1990 |
| 12,9 | Pa · s | 1270 | 962 | 856 | 826 | 4280 | 3490 | 2660 | 2050 |
| 8,97 | Pa · s | 1290 | 973 | 864 | 836 | 4460 | 3610 | 2730 | 2100 |
| 6,25 | Pa · s | 1300 | 984 | 871 | 845 | 4590 | 3700 | 2780 | 2130 |
| 4,36 | Pa · s | 1310 | 990 | 878 | 855 | 4690 | 3760 | 2820 | 2160 |
| 3,04 | Pa · s | 1320 | 996 | 885 | 866 | 4770 | 3820 | 2860 | 2190 |
| 2,12 | Pa · s | 1320 | 1000 | 890 | 876 | 4810 | 3850 | 2880 | 2210 |
| 1,48 | Pa · s | 1320 | 1010 | 895 | 887 | 4860 | 3880 | 2910 | 2240 |
| 1,03 | Pa · s | 1330 | 1010 | 900 | 895 | 4880 | 3910 | 2920 | 2260 |
| 0,721 | Pa · s | 1330 | 1020 | 903 | 901 | 4890 | 3920 | 2930 | 2280 |
| 0,503 | Pa · s | 1330 | 1030 | 904 | 903 | 4880 | 3910 | 2930 | 2290 |

| **Beispiel** | | **29 (Vergleich)** | **30** | **31** | **32** | **33 (Vergleich)** | **34** | **35** | **36** |
|---|---|---|---|---|---|---|---|---|---|
| **Rheologie Kegel / Platte** Schmelzevisk. bei 260°C [Hz] | | | | | | | | | |
| 471 | Pa · s | 268 | 188 | 187 | 162 | 333 | 403 | 302 | 294 |
| 329 | Pa · s | 292 | 203 | 198 | 171 | 369 | 442 | 328 | 319 |
| 229 | Pa · s | 317 | 218 | 208 | 179 | 404 | 478 | 352 | 342 |
| 160 | Pa · s | 339 | 230 | 216 | 185 | 438 | 510 | 372 | 362 |
| 112 | Pa · s | 358 | 241 | 222 | 190 | 468 | 538 | 389 | 379 |
| 77,8 | Pa · s | 375 | 250 | 226 | 193 | 495 | 560 | 403 | 392 |
| 54,3 | Pa · s | 388 | 257 | 229 | 196 | 517 | 578 | 413 | 402 |
| 37,9 | Pa · s | 400 | 262 | 231 | 198 | 536 | 592 | 421 | 410 |
| 26,4 | Pa · s | 413 | 266 | 233 | 199 | 557 | 603 | 428 | 417 |
| 18,4 | Pa · s | 418 | 270 | 233 | 201 | 566 | 611 | 433 | 422 |
| 12,9 | Pa · s | 426 | 272 | 234 | 202 | 575 | 616 | 437 | 428 |
| 8,97 | Pa · s | 433 | 274 | 235 | 203 | 583 | 620 | 441 | 433 |
| 6,25 | Pa · s | 441 | 275 | 235 | 204 | 590 | 624 | 445 | 439 |
| 4,36 | Pa · s | 451 | 276 | 235 | 205 | 597 | 626 | 448 | 444 |
| 3,04 | Pa · s | 464 | 278 | 236 | 206 | 604 | 628 | 451 | 449 |
| 2,12 | Pa · s | 482 | 281 | 236 | 206 | 613 | 629 | 454 | 454 |
| 1,48 | Pa · s | 509 | 285 | 236 | 207 | 627 | 630 | 457 | 458 |
| 1,03 | Pa · s | 547 | 292 | 237 | 209 | 648 | 631 | 460 | 462 |
| 0,721 | Pa · s | 599 | 303 | 239 | 212 | 680 | 631 | 465 | 466 |
| 0,503 | Pa · s | 673 | 319 | 240 | 216 | 734 | 631 | 471 | 472 |

| Schmelzevisk. bei 280°C [Hz] | | | | | | | | | |
|---|---|---|---|---|---|---|---|---|---|
| 471 | Pa · s | 642 | 556 | 513 | 468 | 630 | 693 | 627 | 588 |
| 329 | Pa · s | 748 | 647 | 583 | 521 | 818 | 805 | 714 | 667 |
| 229 | Pa · s | 846 | 727 | 647 | 570 | 1010 | 918 | 804 | 748 |
| 160 | Pa · s | 934 | 798 | 704 | 614 | 1190 | 1030 | 889 | 825 |
| 112 | Pa · s | 1020 | 862 | 754 | 652 | 1330 | 1130 | 967 | 896 |
| 77,8 | Pa · s | 1090 | 917 | 796 | 683 | 1450 | 1230 | 1040 | 959 |
| 54,3 | Pa · s | 1150 | 964 | 831 | 707 | 1570 | 1310 | 1100 | 1010 |
| 37,9 | Pa · s | 1200 | 1000 | 858 | 725 | 1660 | 1380 | 1150 | 1060 |
| 26,4 | Pa · s | 1240 | 1030 | 879 | 739 | 1750 | 1440 | 1190 | 1090 |
| 18,4 | Pa · s | 1270 | 1050 | 895 | 750 | 1810 | 1480 | 1220 | 1120 |
| 12,9 | Pa · s | 1290 | 1070 | 907 | 758 | 1860 | 1520 | 1240 | 1140 |
| 8,97 | Pa · s | 1300 | 1080 | 917 | 764 | 1900 | 1540 | 1260 | 1160 |
| 6,25 | Pa · s | 1310 | 1090 | 925 | 771 | 1930 | 1560 | 1270 | 1180 |
| 4,36 | Pa · s | 1320 | 1100 | 931 | 778 | 1950 | 1580 | 1280 | 1190 |
| 3,04 | Pa · s | 1320 | 1100 | 937 | 785 | 1960 | 1590 | 1290 | 1210 |
| 2,12 | Pa · s | 1320 | 1110 | 941 | 789 | 1970 | 1590 | 1300 | 1220 |
| 1,48 | Pa · s | 1330 | 1110 | 945 | 794 | 1970 | 1600 | 1310 | 1230 |
| 1,03 | Pa · s | 1330 | 1120 | 949 | 798 | 1980 | 1600 | 1310 | 1240 |
| 0,721 | Pa · s | 1330 | 1120 | 952 | 801 | 1980 | 1600 | 1320 | 1250 |
| 0,503 | Pa · s | 1330 | 1120 | 953 | 801 | 1980 | 1600 | 1310 | 1250 |

| Schmelzevisk. bei 300°C [Hz] | | | | | | | | | |
|---|---|---|---|---|---|---|---|---|---|
| 471 | Pa · s | 862 | 1100 | 787 | 826 | 993 | 1000 | 1080 | 997 |
| 329 | Pa · s | 1210 | 1300 | 1090 | 1100 | 1450 | 1420 | 1480 | 1280 |
| 229 | Pa · s | 1560 | 1520 | 1390 | 1350 | 1880 | 1870 | 1850 | 1540 |
| 160 | Pa · s | 1960 | 1750 | 1690 | 1570 | 2540 | 2390 | 2210 | 1810 |
| 112 | Pa · s | 2330 | 1990 | 1960 | 1780 | 3190 | 2860 | 2560 | 2080 |
| 77,8 | Pa · s | 2660 | 2230 | 2190 | 1970 | 3770 | 3300 | 2920 | 2350 |
| 54,3 | Pa · s | 2960 | 2450 | 2390 | 2150 | 4290 | 3720 | 3260 | 2620 |
| 37,9 | Pa · s | 3230 | 2650 | 2580 | 2310 | 4810 | 4130 | 3590 | 2880 |
| 26,4 | Pa · s | 3480 | 2820 | 2740 | 2450 | 5310 | 4510 | 3880 | 3110 |
| 18,4 | Pa · s | 3700 | 2970 | 2870 | 2560 | 5770 | 4850 | 4150 | 3310 |
| 12,9 | Pa · s | 3880 | 3090 | 2980 | 2650 | 6180 | 5150 | 4370 | 3490 |
| 8,97 | Pa · s | 4020 | 3180 | 3070 | 2730 | 6540 | 5410 | 4550 | 3620 |
| 6,25 | Pa · s | 4130 | 3250 | 3140 | 2790 | 6830 | 5610 | 4700 | 3730 |
| 4,36 | Pa · s | 4210 | 3300 | 3190 | 2830 | 7060 | 5780 | 4820 | 3810 |
| 3,04 | Pa · s | 4270 | 3340 | 3230 | 2880 | 7240 | 5900 | 4910 | 3880 |
| 2,12 | Pa · s | 4310 | 3370 | 3260 | 2910 | 7380 | 6000 | 4980 | 3940 |
| 1,48 | Pa · s | 4350 | 3390 | 3290 | 2940 | 7480 | 6080 | 5040 | 3990 |
| 1,03 | Pa · s | 4360 | 3410 | 3310 | 2980 | 7550 | 6130 | 5090 | 4040 |
| 0,721 | Pa · s | 4380 | 3420 | 3330 | 3010 | 7590 | 6170 | 5130 | 4070 |
| 0,503 | Pa · s | 4370 | 3410 | 3330 | 3020 | 7600 | 6180 | 5140 | 4100 |
| | | | | | | | | | |

| **Beispiel** | | | **37 (Vergl.)** | **38** | **39** | **40** | | | |
|---|---|---|---|---|---|---|---|---|---|
| **Rheologie Kegel/Platte** Schmelzeviskosität bei 260°C [Hz] | | | | | | | | | |
| 471 | | Pas | 391 | 344 | 285 | 250 | | | |
| 329 | | Pas | 430 | 375 | 308 | 270 | | | |
| 229 | | Pas | 467 | 404 | 329 | 288 | | | |
| 160 | | Pas | 500 | 429 | 347 | 302 | | | |
| 112 | | Pas | 528 | 450 | 362 | 314 | | | |
| 77,8 | | Pas | 552 | 468 | 374 | 324 | | | |
| 54,3 | | Pas | 570 | 481 | 382 | 331 | | | |
| 37,9 | | Pas | 584 | 491 | 389 | 337 | | | |
| 26,4 | | Pas | 595 | 498 | 394 | 341 | | | |
| 18,4 | | Pas | 601 | 502 | 397 | 345 | | | |
| 12,9 | | Pas | 604 | 505 | 399 | 348 | | | |
| 8,97 | | Pas | 606 | 507 | 401 | 351 | | | |
| 6,25 | | Pas | 607 | 507 | 402 | 354 | | | |
| 4,36 | | Pas | 606 | 507 | 403 | 357 | | | |
| 3,04 | | Pas | 606 | 508 | 403 | 360 | | | |
| 2,12 | | Pas | 603 | 506 | 403 | 362 | | | |
| 1,48 | | Pas | 602 | 505 | 403 | 363 | | | |
| 1,03 | | Pas | 601 | 505 | 403 | 365 | | | |
| 0,721 | | Pas | 599 | 504 | 403 | 368 | | | |
| 0,503 | | Pas | 595 | 501 | 403 | 371 | | | |

| Schmelzeviskosität bei 280°C [Hz] | | | | | | | | | |
|---|---|---|---|---|---|---|---|---|---|
| 471 | | Pas | 657 | 670 | 534 | 588 | | | |
| 329 | | Pas | 838 | 768 | 653 | 681 | | | |
| 229 | | Pas | 1010 | 868 | 758 | 767 | | | |
| 160 | Pas | 1160 | 965 | 850 | 848 | | | | |
| 112 | Pas | 1300 | 1060 | 927 | 921 | | | | |
| 77,8 | Pas | 1420 | 1140 | 995 | 985 | | | | |
| 54,3 | Pas | 1530 | 1220 | 1050 | 1040 | | | | |
| 37,9 | Pas | 1620 | 1280 | 1100 | 1090 | | | | |
| 26,4 | Pas | 1700 | 1330 | 1140 | 1130 | | | | |
| 18,4 | Pas | 1770 | 1380 | 1180 | 1160 | | | | |
| 12,9 | Pas | 1820 | 1410 | 1200 | 1180 | | | | |
| 8,97 | Pas | 1860 | 1440 | 1220 | 1200 | | | | |
| 6,25 | Pas | 1890 | 1450 | 1230 | 1210 | | | | |
| 4,36 | Pas | 1910 | 1470 | 1240 | 1230 | | | | |
| 3,04 | Pas | 1920 | 1480 | 1250 | 1240 | | | | |
| 2,12 | Pas | 1930 | 1480 | 1260 | 1250 | | | | |
| 1,48 | Pas | 1930 | 1480 | 1260 | 1260 | | | | |
| 1,03 | Pas | 1930 | 1480 | 1260 | 1270 | | | | |
| 0,721 | Pas | 1930 | 1480 | 1260 | 1270 | | | | |
| 0,503 | Pas | 1920 | 1470 | 1250 | 1270 | | | | |

| Schmelzeviskosität bei 300°C [Hz] | | | | | | | | | |
|---|---|---|---|---|---|---|---|---|---|
| 471 | Pas | 999 | 1340 | 1060 | 880 | | | | |
| 329 | Pas | 1430 | 1610 | 1330 | 1220 | | | | |
| 229 | Pas | 1870 | 1920 | 1590 | 1520 | | | | |
| 160 | Pas | 2360 | 2260 | 1870 | 1820 | | | | |
| 112 | Pas | 2820 | 2610 | 2160 | 2100 | | | | |
| 77,8 | Pas | 3260 | 2980 | 2450 | 2370 | | | | |
| 54,3 | Pas | 3700 | 3340 | 2730 | 2620 | | | | |
| 37,9 | Pas | 4130 | 3690 | 2990 | 2860 | | | | |
| 26,4 | Pas | 4540 | 4010 | 3230 | 3070 | | | | |
| 18,4 | Pas | 4920 | 4300 | 3450 | 3250 | | | | |
| 12,9 | Pas | 5270 | 4560 | 3630 | 3400 | | | | |
| 8,97 | Pas | 5570 | 4770 | 3790 | 3530 | | | | |
| 6,25 | Pas | 5830 | 4950 | 3910 | 3640 | | | | |
| 4,36 | Pas | 6030 | 5090 | 4000 | 3720 | | | | |
| 3,04 | Pas | 6200 | 5210 | 4080 | 3800 | | | | |
| 2,12 | Pas | 6320 | 5290 | 4140 | 3850 | | | | |
| 1,48 | Pas | 6420 | 5350 | 4180 | 3900 | | | | |
| 1,03 | Pas | 6480 | 5400 | 4210 | 3940 | | | | |
| 0,721 | Pas | 6510 | 5420 | 4230 | 3980 | | | | |
| 0,503 | Pas | 6520 | 5420 | 4230 | 4010 | | | | |

Tabelle 7 zeigt, dass die Vergleichsbeispiele 13, 17, 21, 25, 29, 33 und 37, die das PE-Wachs nicht enthalten, im Gegensatz zu den erfindungsgemäßen Beispielen in der Tabelle bei den drei Messtemperaturen höhere Schmelzviskositäten aufweisen und damit über eine schlechtere Fließfähigkeit verfügen

## Patentansprüche

1. Zusammensetzung umfassend
A) 67,0 bis 99,95 Gew.-% eines oder mehrerer Copolycarbonate enthaltend Monomereinheiten ausgewählt aus der Gruppe bestehend aus den Struktureinheiten der allgemeinen Formeln (1a), (1b), (1c) und (1d) 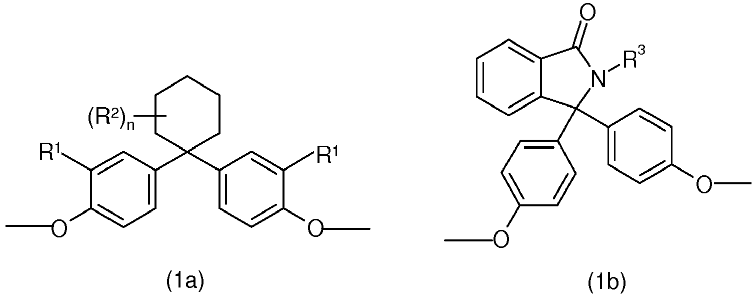 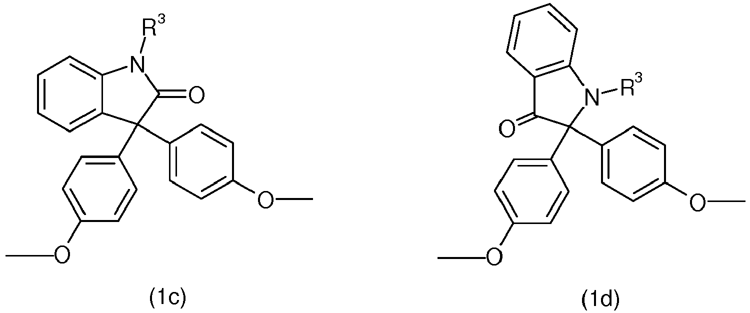 in denen
R¹ für Wasserstoff oder C₁-C₄-Alkyl,
R² für C₁-C₄-Alkyl,
n für 0, 1, 2 oder 3, und
R³ für C₁-C₄-Alkyl, Aralkyl oder Aryl steht,
oder
67,0 bis 99,95 Gew.-% eines Blends aus dem einem oder den mehreren Copolycarbonat(en) und wenigstens einem weiteren Homo- oder Copolycarbonat enthaltend eine oder mehrere Monomereinheiten der allgemeinen Formel (2): 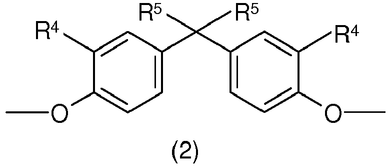 in der
R⁴ für H, lineare oder verzweigte C₁-C₁₀ Alkyl steht und
R⁵ für lineare oder verzweigte C₁-C₁₀ Alkyl steht;
wobei das gegebenenfalls vorhandene weitere Homo- oder Copolycarbonat keine Monomereinheiten der Formeln (1a), (1b), (1c) und (1d) aufweist;
B) 0,05 bis 10,0 Gew.-% wenigstens eines oxidierten säuremodifizierten Polyethylenwachses; und
C) gegebenenfalls ein oder mehrere Additive und/oder Füllstoffe in einer Gesamtmenge von bis zu 30,0 Gew.-%.

2. Zusammensetzung nach Anspruch 1, **dadurch gekennzeichnet, dass** der Oxidationsindex des oxidierten säuremodifizierten Polyethylenwachses größer 8 ist, wobei der Oxidationsindex spektroskopisch ermittelt wird, indem die Fläche des Peaks zwischen 1750 cm⁻¹ und 1680 cm⁻¹ zu der Fläche des Peaks zwischen 1400 cm⁻¹ und 1330 cm⁻¹ ins Verhältnis gesetzt wird.

3. Zusammensetzung nach Anspruch 1 oder 2, **dadurch gekennzeichnet, dass** das oxidierte säuremodifizierte Polyethylenwachs eine Schmelzeviskosität, bestimmt nach ISO 11443 bei 140 °C, zwischen 70 mPa·s und 800 mPa·s aufweist.

4. Zusammensetzung nach einem der vorhergehenden Ansprüche, **dadurch gekennzeichnet, dass** die Menge an oxidiertem säuremodifizierten Polyethylenwachs 0,10 bis 5,0 Gew.-% beträgt.

5. Zusammensetzung nach einem der vorhergehenden Ansprüche, **dadurch gekennzeichnet, dass** der Gesamtanteil der Monomereinheiten der Formeln (1a), (1b), (1c) und (1d) im Copolycarbonat 0,1-88 mol-% (bezogen auf die Summe der darin enthaltenen Diphenol-Monomereinheiten) beträgt.

6. Zusammensetzung gemäß einem der vorhergehenden Ansprüche, **dadurch gekennzeichnet, dass** die Zusammensetzung die ein oder mehreren Copolycarbonate enthaltend eine oder mehrere Monomereinheiten der Formeln (1a), (1b), (1c) und/oder (1d) in einer Menge von wenigstens 60 Gew.-% enthält.

7. Zusammensetzung nach einem der vorhergehenden Ansprüche, **dadurch gekennzeichnet, dass** das Copolycarbonat enthaltend die Monomereinheiten der Formeln (1a), (1b), (1c) und/oder (1d) zusätzlich Monomereinheiten der Formel (3) enthält 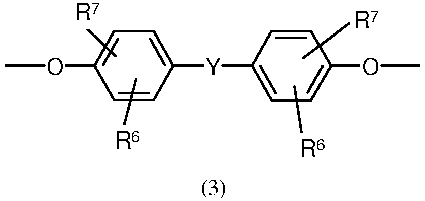 in welcher
R⁶ und R⁷ unabhängig voneinander für H, C₁-C₁₈-Alkyl-, C₁-C₁₈-Alkoxy, Halogen wie Cl oder Br oder für jeweils gegebenenfalls substituiertes Aryl oder Aralkyl stehen, und
Y für eine Einfachbindung, -SO₂-, -CO-, -O-, -S-, C₁-C₆-Alkylen oder C₂-C₅-Alkyliden, ferner für C₆-C₁₂-Arylen, welches gegebenenfalls mit weiteren Heteroatome enthaltenden aromatischen Ringen kondensiert sein kann, steht.

8. Zusammensetzung gemäß einem der vorhergehenden Ansprüche, **dadurch gekennzeichnet, dass** das Copolycarbonat Monomereinheiten abgeleitet von Verbindungen der allgemeinen Formeln (1a"), (1b'), (1c') und/oder (1d') in Kombination mit Monomereinheiten abgeleitet von Verbindungen der allgemeinen Formel (3c) enthält, 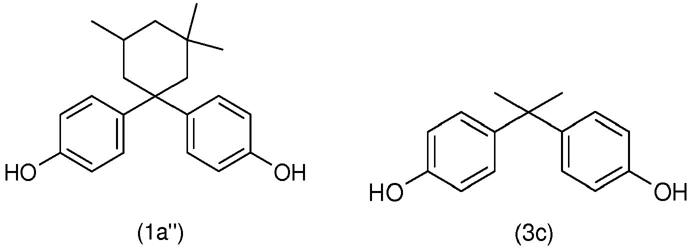 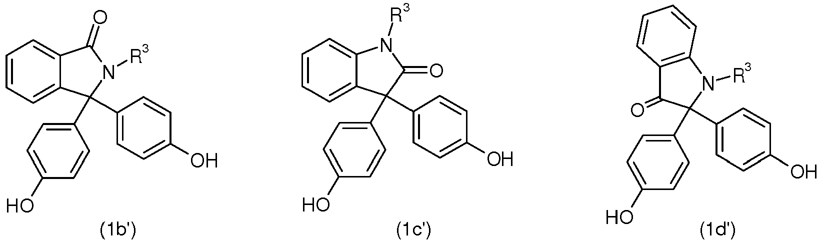 wobei R³ für Methyl oder Phenyl steht.

9. Zusammensetzung gemäß einem der vorhergehenden Ansprüche, **dadurch gekennzeichnet, dass** die Zusammensetzung als Komponente A) einen Blend aus dem Copolycarbonat und dem weiteren Homo- oder Copolycarbonat enthaltend eine oder mehrere Monomereinheiten der allgemeinen Formel (2) enthält, wobei R⁴ für H und R⁵ für lineares oder verzweigtes C₁-C₆ Alkyl steht.

10. Zusammensetzung gemäß einem der vorhergehenden Ansprüche, **dadurch gekennzeichnet, dass** die Zusammensetzung ein oder mehrere Additive ausgewählt aus der Gruppe bestehend aus Thermostabilisatoren, Entformungsmitteln und UV-Stabilisatoren enthält.

11. Zusammensetzung nach einem der vorhergehenden Ansprüche, **dadurch gekennzeichnet, dass** die Zusammensetzung einen anorganischen Füllstoff enthält.

12. Zusammensetzung nach einem der vorhergehenden Ansprüche, **dadurch gekennzeichnet, dass** die Zusammensetzung 0,002 bis 0,2 Gew.-% Thermostabilisator, 0,01 Gew.-% bis 1,00 Gew.-% UV-Stabilisator und 0,05 Gew.-% bis 2,00 Gew.-% Entformungsmittel enthält.

13. Blends, Formteile, Extrudate, Folien und Folienlaminate, erhältlich aus Copolycarbonat-Zusammensetzungen gemäß einem der Ansprüche 1 bis 12 sowie Formteile, Extrudate und Folien enthaltend Coextrusionsschichten erhältlich aus Copolycarbonat-Zusammensetzungen gemäß einem der Ansprüche 1 bis 12.

14. Verwendung von oxidierten säuremodifizierten Polyethylenwachsen zur Verbesserung der Fließfähigkeit von Zusammensetzungen umfassend ein Copolycarbonat gemäß Anspruch 1 oder einen Blend aus dem Copolycarbonat und einem weiteren Homo- oder Copolycarbonat gemäß Anspruch 1.

## Claims

1. Composition, comprising
A) 67.0 to 99.95 wt% of one or more copolycarbonates comprising monomer units selected from the group consisting of the structural units of general formulae (1a), (1b), (1c) and (1d) 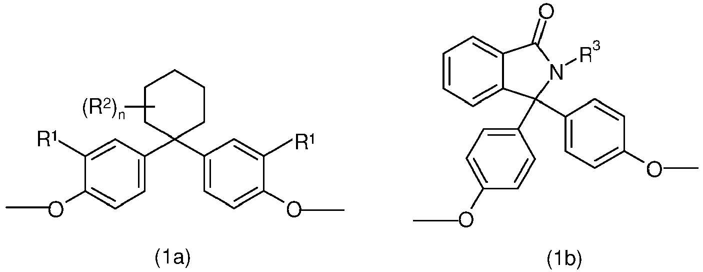 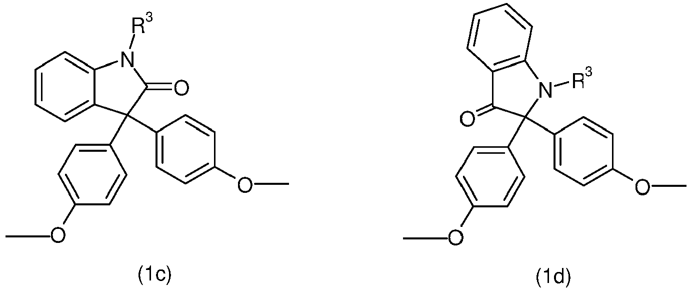 in which
R¹ represents hydrogen or C₁-C₄-alkyl,
R² represents C₁-C₄-alkyl,
n represents 0, 1, 2 or 3 and
R³ represents C₁-C₄-alkyl, aralkyl or aryl,
or
67.0 to 99.95 wt% of a blend of the one or more copolycarbonates and at least one further homo- or copolycarbonate comprising one or more monomer units of general formula (2): 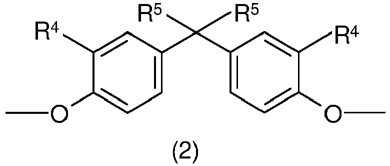 in which
R⁴ represents H, linear or branched C₁-C₁₀ alkyl and
R⁵ represents linear or branched C₁-C₁₀ alkyl;
wherein the optionally present further homo- or copolycarbonate has no monomer units of formulae (1a), (1b), (1c) and (1d);
B) 0.05 to 10.0 wt% of at least one oxidized acid-modified polyethylene wax; and
C) optionally one or more additives and/or fillers in a total amount of up to 30.0 wt%.

2. Composition according to Claim 1, **characterized in that** the oxidation index of the oxidized acid-modified polyethylene wax is greater than 8, wherein the oxidation index is ascertained spectroscopically by determining the ratio of the area of the peak between 1750 cm⁻¹ and 1680 cm⁻¹ to the area of the peak between 1400 cm⁻¹ and 1330 cm⁻¹.

3. Composition according to Claim 1 or 2, **characterized in that** the oxidized acid-modified polyethylene wax has a melt viscosity, determined as per ISO 11443, at 140°C between 70 mPa·s and 800 mPa·s.

4. Composition according to any of the preceding claims, **characterized in that** the amount of oxidized acid-modified polyethylene wax is 0.10 to 5.0 wt%.

5. Composition according to any of the preceding claims, **characterized in that** the total proportion of the monomer units of formulae (1a), (1b), (1c) and (1d) in the copolycarbonate is 0.1 - 88 mol% (based on the sum of the diphenol monomer units present therein).

6. Composition according to any of the preceding claims, **characterized in that** the composition comprises the one or more copolycarbonates comprising one or more monomer units of formulae (1a), (1b), (1c) and/or (1d) in an amount of at least 60 wt%.

7. Composition according to any of the preceding claims, **characterized in that** the copolycarbonate comprising the monomer units of formulae (1a), (1b), (1c) and/or (1d) further comprises monomer units of formula (3) 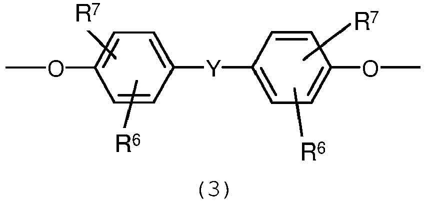 in which
R⁶ and R⁷ independently of one another represent H, C₁-C₁₈-alkyl-, C₁-C₁₈-alkoxy, halogen such as Cl or Br or respectively optionally substituted aryl or aralkyl and
Y represents a single bond, -SO₂-, -CO-, -O-,-S-, C₁-C₆-alkylene or C₂-C₅-alkylidene, furthermore C₆-C₁₂-arylene, which may optionally be fused with further heteroatom-comprising aromatic rings.

8. Composition according to any of the preceding claims, **characterized in that** the copolycarbonate comprises monomer units derived from compounds of general formulae (1a"), (1b'), (1c') and/or (1d') in combination with monomer units derived from compounds of general formula (3c), 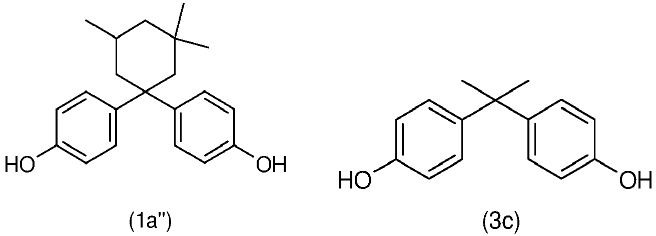 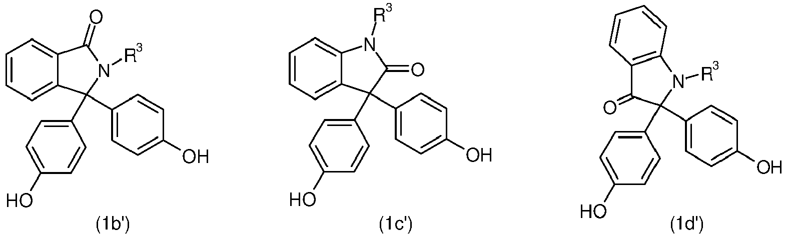 wherein R³ is methyl or phenyl.

9. Composition according to any of the preceding claims, **characterized in that** the composition comprises as component A) a blend of the copolycarbonate and the further homo- or copolycarbonate comprising one or more monomer units of general formula (2), wherein R⁴ represents H and R⁵ represents linear or branched C₁-C₆ alkyl.

10. Composition according to any of the preceding claims, **characterized in that** the composition comprises one or more additives selected from the group consisting of thermal stabilizers, demoulding agents and UV stabilizers.

11. Composition according to any of the preceding claims, **characterized in that** the composition comprises an inorganic filler.

12. Composition according to any of the preceding claims, **characterized in that** the composition comprises 0.002 to 0.2 wt% of thermal stabilizer, 0.01 wt% to 1.00 wt% of UV stabilizer and 0.05 wt% to 2.00 wt% of demoulding agent.

13. Blend, moulding, extrudate, film or film laminate obtainable from copolycarbonate compositions according to any of Claims 1 to 12 or else a moulding, extrudate or film comprising coextrusion layers obtainable from copolycarbonate compositions according to any of Claims 1 to 12.

14. Use of oxidized acid-modified polyethylene waxes for improving the flowability of compositions comprising a copolycarbonate according to Claim 1 or a blend of the copolycarbonate and a further homo- or copolycarbonate according to Claim 1.

## Revendications

1. Composition comprenant
A) 67,0 à 99,95 % en poids d'un ou plusieurs copolycarbonates contenant des motifs monomériques choisis dans le groupe constitué par les motifs structuraux des formules générales (1a), (1b), (1c) et (1d) 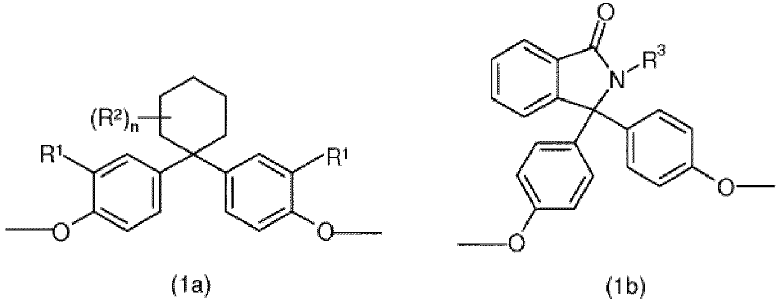 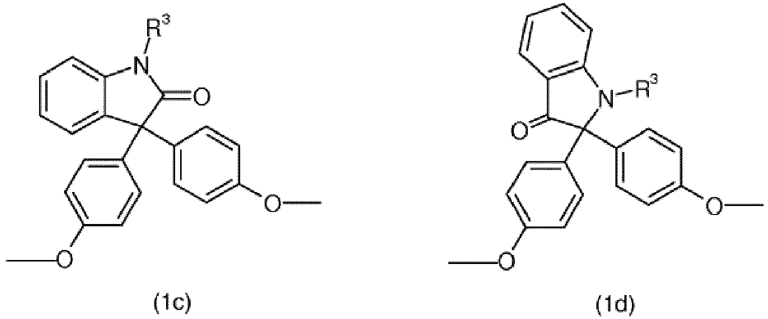 dans lesquelles
R¹ représente hydrogène ou C₁₋₄-alkyle,
R² représente C₁₋₄-alkyle,
n représente 0, 1, 2 ou 3, et
R³ représente C₁₋₄-alkyle, aralkyle ou aryle,
ou
67,0 à 99,95 % en poids d'un mélange du ou des copolycarbonate(s) et d'au moins un homocarbonate ou copolycarbonate supplémentaire contenant un ou plusieurs motifs monomériques de formule générale (2) : 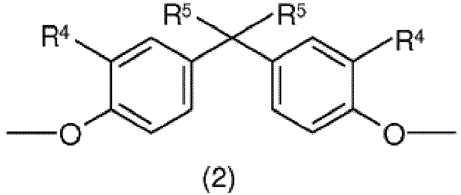 dans laquelle
R⁴ représente H, C₁₋₁₀-alkyle linéaire ou ramifié et
R⁵ représente C₁₋₁₀-alkyle linéaire ou ramifié ;
l'homocarbonate ou le copolycarbonate supplémentaire éventuellement présent ne présentant aucun motifs monomériques des formules (1a), (1b), (1c) et (1d) ;
B) 0,05 à 10,0 % en poids d'au moins une cire de polyéthylène oxydée modifiée par acide ; et
C) éventuellement un(e) ou plusieurs additifs et/ou charges en une quantité totale de jusqu'à 30,0 % en poids.

2. Composition selon la revendication 1, **caractérisée en ce que** l'indice d'oxydation de la cire de polyéthylène oxydée modifiée par acide est supérieur à 8, l'indice d'oxydation étant déterminé spectroscopiquement, en effectuant le rapport de l'aire du pic compris entre 1750 cm⁻¹ et 1680 cm⁻¹ à l'aire du pic compris entre 1400 cm⁻¹ et 1330 cm⁻¹.

3. Composition selon la revendication 1 ou 2, **caractérisée en ce que** la cire de polyéthylène oxydée modifiée par acide présente une viscosité à l'état fondu, déterminée d'après la norme ISO 11443 à 140 °C, comprise entre 70 mPa.s et 800 mPa.s.

4. Composition selon l'une quelconque des revendications précédentes, **caractérisée en ce que** la quantité de cire de polyéthylène oxydée modifiée par acide est de 0,10 à 5,0 % en poids.

5. Composition selon l'une quelconque des revendications précédentes, **caractérisée en ce que** la part totale des motifs monomériques des formules (1a), (1b), (1c) et (1d) dans le copolycarbonate est de 0,1 à 88 % en moles (par rapport à la somme des motifs monomériques de type diphénol contenus dans celui-ci).

6. Composition selon l'une quelconque des revendications précédentes, **caractérisée en ce que** la composition contient le ou les copolycarbonate(s) contenant un ou plusieurs motifs monomériques des formules (1a), (1b), (1c) et/ou (1d) en une quantité d'au moins 60 % en poids.

7. Composition selon l'une quelconque des revendications précédentes, **caractérisée en ce que** le copolycarbonate contenant les motifs monomériques des formules (1a), (1b), (1c) et/ou (1d) contient de plus des motifs monomériques de formule (3) 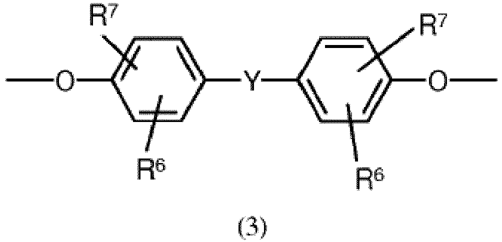 dans laquelle
R⁶ et R⁷ indépendamment l'un de l'autre représentent H, C₁₋₁₈-alkyle, C₁₋₁₈-alcoxy, halogène tel que Cl ou Br, ou aryle ou aralkyle à chaque fois éventuellement substitué, et
Y représente une simple liaison, -SO₂-, -CO-, -O-, -S-, C₁₋₆-alkylène, C₂₋₅-alkylidène, par ailleurs représente C₆₋₁₂-arylène, qui peut être éventuellement condensé avec d'autres cycles aromatiques contenant des hétéroatomes.

8. Composition selon l'une quelconque des revendications précédentes, **caractérisée en ce que** le copolycarbonate contient des motifs monomériques dérivés de composés des formules générales (1a"), (1b'), (1c') et/ou (1d') en combinaison avec des motifs monomériques dérivés de composés de formule générale (3c), 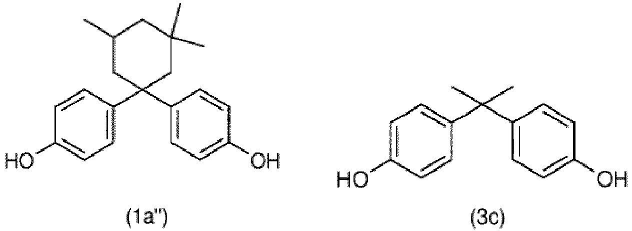 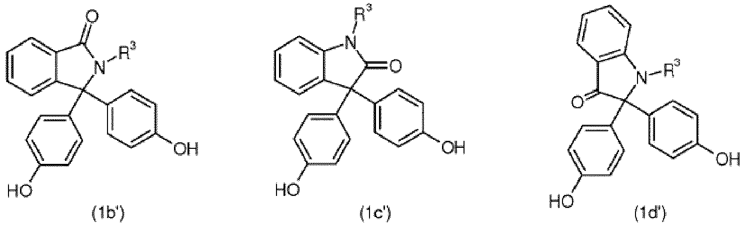 R³ représentant méthyle ou phényle.

9. Composition selon l'une quelconque des revendications précédentes, **caractérisée en ce que** la composition contient en tant que composant A) un mélange du copolycarbonate et de l'homopolycarbonate ou copolycarbonate supplémentaire contenant un ou plusieurs motifs monomériques de formule générale (2), R⁴ représentant H et R⁵ représentant C₁₋₆-alkyle linéaire ou ramifié.

10. Composition selon l'une quelconque des revendications précédentes, **caractérisée en ce que** la composition contient un ou plusieurs additifs choisis dans le groupe constitué par les agents thermostabilisants, les agents de démoulage et des stabilisants UV.

11. Composition selon l'une quelconque des revendications précédentes, **caractérisée en ce que** la composition contient une charge inorganique.

12. Composition selon l'une quelconque des revendications précédentes, **caractérisée en ce que** la composition contient 0,002 à 0,2 % en poids de d'agent thermostabilisant, 0,01 % en poids à 1,00 % en poids de stabilisants UV et 0,05 % en poids à 2,00 % en poids d'agent de démoulage.

13. Mélanges, articles moulés, extrudats, feuilles et stratifiés de feuilles pouvant être obtenu(e)s à partir de compositions de copolycarbonate selon l'une quelconque des revendications 1 à 12 ainsi qu'articles moulés, extrudats et feuilles contenant des couches de coextrusion pouvant être obtenu(e)s à partir de compositions de copolycarbonate selon l'une quelconque des revendications 1 à 12.

14. Utilisation de cires de polyéthylène oxydées modifiées par acide pour l'amélioration de la fluidité de compositions comprenant un copolycarbonate selon la revendication 1 ou un mélange du copolycarbonate et d'un homopolycarbonate ou d'un copolycarbonate supplémentaire selon la revendication 1.
